# EUROPEAN PATENT APPLICATION

(11) **EP 2 055 907 A1**
(43) Date of publication of application: **06.05.2009**
(21) Application number: 08721560.4
(22) Date of filing: 07.03.2008
(51) Int. Cl.: F01L 13/00, F01L 1/26, F02D 13/02, F02D 29/02

(54) **CONTROLLER OF VARIABLE VALVE ACTUATOR**

(30) Priority: 20.03.2007 JP 2007072220; 22.01.2008 JP 2008011830
(71) Applicant: Toyota Jidosha Kabushiki Kaisha, Toyota-shi Aichi 471-8571 (JP)
(72) Inventor: KIDOOKA, Akio, Toyota-shi Aichi 471-8571 (JP); EZAKI, Shuichi, Toyota-shi Aichi 471-8571 (JP)
(74) Representative: Intes, Didier Gérard André
(86) International application number: PCT/JP2008/054142
(87) International publication number: WO 2008/114626

(57) **Abstract**

The present invention provides a variable valve mechanism control device that is capable of reducing the power consumption and rating of an electric motor by allowing camshaft rotary inertia torque to reduce spring reaction force during a valve lift. Camshaft rotary inertia force is increased to a value not smaller than a predetermined value before the start of a valve lift. During the time interval between the instant at which the valve lift starts and the instant at which the maximum lift is provided, the spring reaction force of a valve spring is used as deceleration torque for the camshaft rotary inertia force. During the time interval between the instant at which the maximum lift is provided and the instant at which the valve lift terminates, the spring reaction force is used as acceleration torque for the camshaft rotary inertia force. The camshaft rotary inertia force cancels the spring reaction force so that motor torque generated during a valve lift is composed of counter-friction torque only.

## Description

### Technical Field

The present invention relates to a variable valve mechanism control device with an electric motor, and more particularly to drive control over an electric motor.

### Background Art

A variable valve mechanism control device with an electric motor is known (refer, for instance, to Patent Document 1). The control device disclosed in Patent Document 1 includes a torque reduction mechanism for imparting counter-torque in consideration of valve spring torque, inertia torque, and in-cylinder compression torque, which arise while an intake valve or exhaust valve is being opened or closed. This decreases the torque applied to the electric motor, thereby reducing the rating of the electric motor.

Patent Document 1: Japanese Patent Laid-open 2005-171786
Patent Document 2: Japanese Patent Laid-open 2005-171937

### Disclosure of Invention

### Problem to be Solved by the Invention

However, the control device disclosed in Patent Document 1 entails a cost increase because it newly includes the torque reduction mechanism. In addition, the use of the torque reduction mechanism may result in increased friction torque between a cam and a valve.

The present invention has been made to solve the above problem. An object of the present invention is to provide a variable valve mechanism control device that is capable of reducing the power consumption and rating of an electric motor by using camshaft rotary inertia torque to reduce spring reaction force during a valve lift.

### Means for Solving the Problem

The first aspect of the present invention is a variable valve mechanism control device for an internal combustion engine, comprising:
a camshaft on which a cam is mounted to drive a valve that is biased by a valve spring;
an electric motor which rotationally drives the camshaft; and
control means for exercising drive control over the electric motor;
wherein the control means controls the rotary inertia force of the camshaft so as to be equal to or more than a predetermined value at the beginning of a valve lift so that the rotary inertia force cancels the spring reaction force of the valve spring.

The second aspect of the present invention is the variable valve mechanism control device according to the first aspect of the present invention, wherein the control means controls the rotational position of the electric motor so that the rotation speed of the camshaft is decreased by the spring reaction force exerted during the time interval between the instant at which a valve lift starts and the instant at which the maximum lift position is reached, and that the rotation speed of the camshaft is increased by the spring reaction force exerted during the time interval between the instant at which the maximum lift position is reached and the instant at which the valve lift terminates.

The third aspect of the present invention is the variable valve mechanism control device according to the first aspect of the present invention, wherein the control means employs the spring reaction force exerted during the time interval between the instant at which the valve lift starts and the instant at which the maximum lift position is reached as deceleration torque for the rotary inertia force, while employing the spring reaction force exerted during the time interval between the instant at which the maximum lift position is reached and the instant at which the valve lift terminates as acceleration torque for the rotary inertia force.

The fourth aspect of the present invention is the variable valve mechanism control device according to the first aspect of the present invention, wherein, when the rotary inertia force exerted at the end of the valve lift is smaller than the predetermined value, the control means requires during a cam base circle slide to the electric motor to generate such torque that causes said rotary inertia force to be equal to or more than the predetermined value.

The fifth aspect of the present invention is the variable valve mechanism control device according to the first aspect of the present invention, wherein the control means inhibits the electric motor to generate torque opposing the spring reaction force and requires the electric motor to generate only torque opposing the friction of the cam and valve during a valve lift.

The sixth aspect of the present invention is the variable valve mechanism control device according to any one of the first to fifth aspects of the present invention, further comprising:
engine speed change means which raises an engine speed to a value equal to or more than a predetermined value when a requested engine output value is equal to or more than a predetermined value and the engine speed is in a low rotation speed region where the engine speed is equal to or lower than the predetermined value.

The seventh aspect of the present invention is the variable valve mechanism control device according to any one of the first to fifth aspects of the present invention, further comprising:
an inertia force increase member which is installed in a cam drive system having the camshaft and the electric motor to increase the camshaft rotary inertia force;
wherein the inertia force increase member adjusts the enlargement range for an actual operating angle in a low rotation speed region where an engine speed is equal to or lower than a predetermined value.

The eighth aspect of the present invention is the variable valve mechanism control device according to any one of the first to fifth aspects of the present invention, further comprising:
an inertia force change mechanism which can change the camshaft rotary inertia force when the operating angle of the valve is to be changed within a low rotation speed region where an engine speed is equal to or lower than a predetermined value.

The ninth aspect of the present invention is the variable valve mechanism control device according to the first aspect of the present invention, wherein, when the cam is to be driven from a stopped state, the control means requires the electric motor to generate such torque that causes the rotary inertia force to be equal to or more than a predetermined value during a cam base circle slide before the start of a valve lift.

The tenth aspect of the present invention is the variable valve mechanism control device according to the first aspect of the present invention, wherein, when the cam is to be driven from a stopped state, the control means requires the electric motor to generate such torque that causes the rotary inertia force to reach a predetermined initial value during a cam base circle slide before the start of a valve lift, and then requires the electric motor to generate such torque that causes the rotary inertia force at the end of the valve lift to reach a predetermined value greater than the predetermined initial value.

The eleventh aspect of the present invention is the variable valve mechanism control device according to claim 1, wherein, when the cam is to be driven in a normal rotation direction, the control means changes the rotation speed of the camshaft during a cam base circle slide in accordance with an engine speed so that the rotation of the camshaft synchronizes with the rotation of a crankshaft.

The twelfth aspect of the present invention is a variable valve mechanism control device for an internal combustion engine, comprising:
a camshaft on which a cam is mounted to drive a valve that is biased by a valve spring;
an electric motor which rotationally drives the camshaft; and
control means for exercising drive control over the electric motor;
wherein the control means controls the rotational position of the electric motor so that the cam rotation speed during a valve lift is equal to or lower than the cam rotation speed during a cam base circle slide.

The thirteenth aspect of the present invention is the variable valve mechanism control device according to the first aspect of the present invention, wherein the control means increase the rotary inertia force to a value equal to or more than a predetermined value by imparting torque of the electric motor during a cam base circle slide so as to swingingly drive the cam, and then synchronizes the rotation of the camshaft with the rotation of a crankshaft.

The fourteenth aspect of the present invention is the variable valve mechanism control device according to the thirteenth aspect of the present invention, further comprising:
startup request acquisition means for acquiring a startup request for the internal combustion engine;
wherein the control means changes the period for swingingly driving the cam to increase the rotary inertia force in compliance with the startup request acquired by the startup request acquisition means.

The fifteenth aspect of the present invention is the variable valve mechanism control device according to the fourteenth aspect of the present invention, wherein the control means includes judgment means for determining the degree of requested acceleration indicated by the startup request, applies the torque of the electric motor only during a cam base circle slide if the degree of requested acceleration is smaller than a predetermined value, and applies the torque of the electric motor not only during a cam base circle slide but also during a valve lift if the degree of requested acceleration is equal to or more than the predetermined value.

### Advantages of the Invention

According to the first aspect of the present invention, the spring reaction force is cancelled by the camshaft rotary inertia force. It means that, since the spring reaction force generated during a valve lift is reduced by the camshaft rotary inertia force, the torque that should be generated by the electric motor during a valve lift can be reduced. This makes it possible to reduce the power consumption and rating of the electric motor.

According to the second aspect of the present invention, the rotational position of the electric motor is controlled so that the camshaft rotation speed is decreased by the spring reaction force generated during the period between the instant at which a valve lift starts and the instant at which the maximum lift position is reached, and that the camshaft rotation speed is increased by the spring reaction force generated during the period between the instant at which the maximum lift position is reached and the instant at which the valve lift terminates. This enables the camshaft rotary inertia force to reduce the spring reaction force during a valve lift.

According to the third aspect of the present invention, the spring reaction force generated during the period between the instant at which a valve lift starts and the instant at which the maximum lift position is reached is used as deceleration torque for the camshaft rotary inertia force, and the spring reaction force generated during the period between the instant at which the maximum lift position is reached and the instant at which the valve lift terminates is used as acceleration torque for the camshaft rotary inertia force. This enables the camshaft rotary inertia force to reduce the spring reaction force during a valve lift.

According to the fourth aspect of the present invention, in a case where the camshaft rotary inertia force is smaller than a predetermined value at the end of a valve lift, the electric motor is required to generate such torque that makes the camshaft rotary inertia force equal to or more than the predetermined value during a cam base circle slide. The torque required to the electric motor to generate can be smaller during a cam base circle slide than during a valve lift. It is therefore possible to avoid an increase in the power consumption and rating of the electric motor.

According to the fifth aspect of the present invention, the electric motor is required to generate no counter-spring-reaction-force torque but only counter-friction torque during a valve lift. This makes it possible to reduce the torque required to the electric motor to generate during a valve lift. Thus, the rating of the electric motor can be reduced since the rating of the electric motor can be determined merely by considering the counter-friction torque.

According to the sixth aspect of the present invention, in a case where the requested engine output value is equal to or more than a predetermined value in a low rotation speed region, engine speed is increased to equal to or more than a predetermined value by the engine speed change means. Here, since the camshaft rotary inertia force becomes smaller in the low rotation speed region than in a high rotation speed region, the enlargement range for the actual operating angle becomes greater in the low rotation speed region. When the operating angle is large, it may not be possible to achieve a requested engine output value, since the Atkinson cycle is implemented so that adequate torque cannot be generated. The sixth aspect of the present invention can reduce the enlargement range for the actual operating angle by switching toward the high rotation speed side. This makes it possible to generate adequate torque and achieve a requested engine output value.

According to the seventh aspect of the present invention, the enlargement range for the actual operating angle in the low rotation speed region is adjusted by increasing the camshaft rotary inertia force by the inertia force increase member. This makes it possible to achieve target values for fuel efficiency and torque.

According to the eighth aspect of the present invention, the inertia force change mechanism can change the camshaft rotary inertia force when the valve operating angle is changed in the low rotation speed region. In other words, the enlargement range for the actual operating angle can be changed by changing the camshaft rotary inertia force, so as to implement a desired valve operating angle.

According to the ninth aspect of the present invention, when a stopped cam is to be driven, the electric motor is required to generate such torque that makes the camshaft rotary inertia force equal to or more than the predetermined value during a cam base circle slide before the start of a valve lift. The camshaft rotary inertia force, which has been increased before the start of the valve lift, cancels the spring reaction force during the valve lift. Further, since the spring reaction force does not act on the camshaft during the cam base circle slide, the camshaft rotary inertia force can be increased even if the torque required to the electric motor to generate is small. This makes it possible to reduce the power consumption of the electric motor when the cam is to be driven from its stopped state. Consequently, the rating of the electric motor can be reduced.

According to the tenth aspect of the present invention, when a stopped cam is to be driven, the electric motor is required to generate such torque that makes the camshaft rotary inertia force reach to the predetermined initial value during a cam base circle slide before the start of a valve lift. Subsequently, the electric motor is required to generate such torque that makes the camshaft rotary inertia force reach to a predetermined value greater than the predetermined initial value at the end of the valve lift. As the torque required to the electric motor to generate is divided, the torque required to the electric motor to generate before the start of a valve lift is reduced. Therefore, the tenth aspect of the present invention can accept a lower electric motor rating than the ninth aspect.

According to the eleventh aspect of the present invention, the rotation of the camshaft can be synchronized with that of the crankshaft by changing the camshaft rotation speed during a cam base circle slide in accordance with the engine speed.

According to the twelfth aspect of the present invention, the rotational position of the electric motor is controlled so that the cam rotation speed during a valve lift is equal to or lower than the cam rotation speed during a cam base circle slide. This makes it possible to minimize the torque that is required to the electric motor to generate during a valve lift.

According to the thirteenth aspect of the present invention, the camshaft rotary inertia force is increased to a value equal to or more than the predetermined value necessary for normal rotation drive by applying the torque of the electric motor during a cam base circle slide to swingingly drive the cam. Subsequently, the cam is driven in the normal direction so that the rotation of the camshaft is synchronized with that of the crankshaft. The camshaft rotary inertia force does not drastically increase to a value equal to or more than the predetermined value, but gradually increases through repeated cam swings. This makes it possible to decrease the electric motor torque, thereby reducing the rating of the electric motor.

According to the fourteenth aspect of the present invention, the period for swingingly driving the cam to increase the rotary inertia force is changed in accordance with an internal combustion engine startup request. Therefore, the cam can switch from swing drive to normal rotation drive with optimum timing according to the internal combustion engine startup request.

According to the fifteenth aspect of the present invention, the torque of the electric motor is applied only during a cam base circle slide if the degree of requested acceleration indicated by the internal combustion engine startup request is smaller than the predetermined value. This provides a relatively long period for swinging the cam to increase the camshaft rotary inertia force. If, on the other hand, the degree of requested acceleration is not smaller than the predetermined value, the torque of the electric motor is applied not only during a cam base circle slide but also during a valve lift. This makes it possible to increase the camshaft rotary inertia force in a short period of time. Consequently, the cam can switch from swing drive to normal rotation drive in a short period of time.

### Brief Description of Drawings

Fig. 1 is a perspective view illustrating the configuration of a variable valve mechanism 10 according to a first embodiment of the present invention;
Fig. 2 is an axial view of the first camshaft 18 shown in Fig. 1;
Fig. 3 is a drawing for describing the configuration of the engine 1 in which the variable valve mechanism 10 shown in Fig. 1 is mounted;
Fig. 4 is a drawing for describing the configuration of a hybrid vehicle system according to the first embodiment of the present invention;
Fig. 5 is a perspective view illustrating the essential part configuration of a drive mechanism in the hybrid vehicle system shown in Fig. 4;
Figs. 6A and 6B are drawings for describing the spring reaction force that acts on a camshaft during a valve lift;
Fig. 7 is a drawing for describing the motor torque to be generated when the cam rotation speed is constant;
Figs. 8A to 8C show how the spring reaction force acting on the camshaft affects the cam speed in the first embodiment of the present invention;
Fig. 9 shows how the camshaft rotary inertia force changes in the first embodiment of the present invention;
Figs. 10A to 10E show valve lift characteristics and cam rotation speed changes at various engine speeds in the first embodiment of the present invention;
Fig. 11 is a drawing for describing a first modification of the first embodiment of the present invention;
Fig. 12 is a drawing for describing a second modification of the first embodiment of the present invention;
Figs. 13A to 13C show how the spring reaction force acting on a camshaft acts on the cam speed in a second embodiment of the present invention;
Fig. 14 shows a map that defines a target value for the cam rotation speed during a cam base circle slide;
Fig. 15 shows how the camshaft rotary inertia force changes in the second embodiment of the present invention;
Fig. 16 shows how the cam rotation speed changes in the second embodiment of the present invention;
Fig. 17 shows the relationship between the engine speed NE and actual operating angle in a third embodiment of the present invention;
Fig. 18 is a collinear drawing for describing a distribution change operation that the power distribution mechanism 51 performs when the engine speed NE is to be shifted toward a high rotation speed side;
Fig. 19 shows an inertia force increase section provided in a cam drive system according to a fourth embodiment of the present invention;
Fig. 20 shows an inertia force increase section provided in a cam drive system according to a modification of the fourth embodiment of the present invention;
Fig. 21 shows an inertia force change mechanism according to a fifth embodiment of the present invention;
Fig. 22 shows cam rotation speed changes and motor torque in the sixth embodiment of the present invention;
Fig. 23 shows cam rotation speed changes and motor torque in the seventh embodiment of the present invention;
Figs. 24A and 24B show cam phase changes and valve lifts in the eighth embodiment of the present invention;
Figs. 25A to 25C show an example of motor torque that is imparted in the ninth embodiment when an engine startup request is generated in accordance with a catalyst warm-up request;
Figs. 26A to 26C show an example of motor torque that is imparted in the ninth embodiment when an engine startup request is generated in accordance with an acceleration request; and
Fig. 27 is a flowchart illustrating a routine that the ECU 30 executes in the ninth embodiment.
will now be described with reference to.

### Description of Reference Numerals

1 Engine
3 Crankshaft
10 Variable Valve Mechanism
14; 15; 16; 17 Cam
18; 19 Camshaft
20; 21; 23; 24; 25 Gear
22; 26 Motor
27 Weight
30 ECU
44 Transmission
51 Power transfer mechanism
52 Generator
54 Motor
60 Battery

### Best Mode for Carrying Out the Invention

Embodiments of the present invention will now be described with reference to the accompanying drawings. Like elements in the drawings are designated by the same reference numerals and will not be redundantly described.

### First Embodiment

### [Configuration of Variable Valve Mechanism]

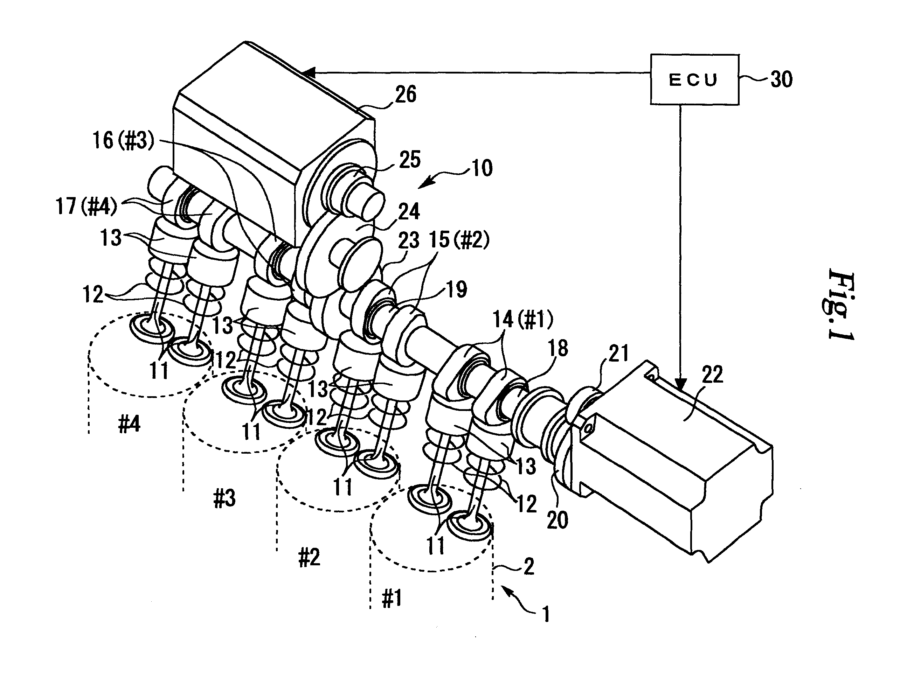

Fig. 1 is a perspective view illustrating the configuration of a variable valve mechanism 10 according to a first embodiment of the present invention. As shown in Fig. 1, the variable valve mechanism 10 is provided to an engine 1 at the side of an intake valve 11. The variable valve mechanism 10 is capable of changing the operating angle and lift amount of the intake valve 11.
The engine 1 is, for example, an in-line four-cylinder gasoline engine. In Fig. 1, the reference numerals #1 to #4 respectively represent the first to fourth cylinders of the engine 1. In the engine 1, explosion occurs in the order of the first, third, fourth, and second cylinders, as is the case with a common engine.

Two intake valves 11 provided for each cylinder 2 are biased toward valve lifters 13 by the spring reaction force of valve springs 12. Cams 14, 15, 16, 17, each of which is related to each cylinder 2, are positioned above the valve lifters 13.
The cam 14 related to the first cylinder #1 and the cam 17 related to the fourth cylinder #4 are fastened to a first camshaft 18. The cam 15 related to the second cylinder #2 and the cam 16 related to the third cylinder #3 are fastened to a second camshaft 19. These camshafts 18, 19 are coaxially positioned and capable of rotating each other.

The first camshaft 18 is coaxially fastened to a first driven gear 20. The first driven gear 20 is engaged with a first output gear 21. The first output gear 21 is fastened to the same axis as for the output shaft of a first motor 22. The configuration described above makes it possible to transmit the torque of the first motor 22 to the first camshaft 18 through the gears 20, 21. In other words, the first motor 22 directly drives the cams 14, 17 without regard to a later-described crankshaft 3, thereby controlling the intake valve opening characteristics of the first cylinder #1 and fourth cylinder #4.

The second camshaft 19 is coaxially fastened to a second driven gear 23. A second output gear 25 meshes with the second driven gear 23 is engaged, via an intermediate gear 24, with a second output gear 25. The second output gear 25 is fastened to the same axis as for the output shaft of a second motor 26. The configuration described above makes it possible to transmit the torque of the second motor 26 to the second camshaft 19 through the gears 23, 24, 25. In other words, the second motor 26 directly drives the cams 15, 16 without regard to the crankshaft 3, thereby controlling the intake valve opening characteristics of the second cylinder #2 and third cylinder #3.
The operation of the variable valve mechanism 10 described above is controlled by an ECU (Electronic Control Unit) 30, which serves as a control device. More specifically, the ECU 30 issues drive instructions to the first motor 22 and second motor 26 in accordance with outputs from various sensors to control the rotational positions of the motors 22, 26.

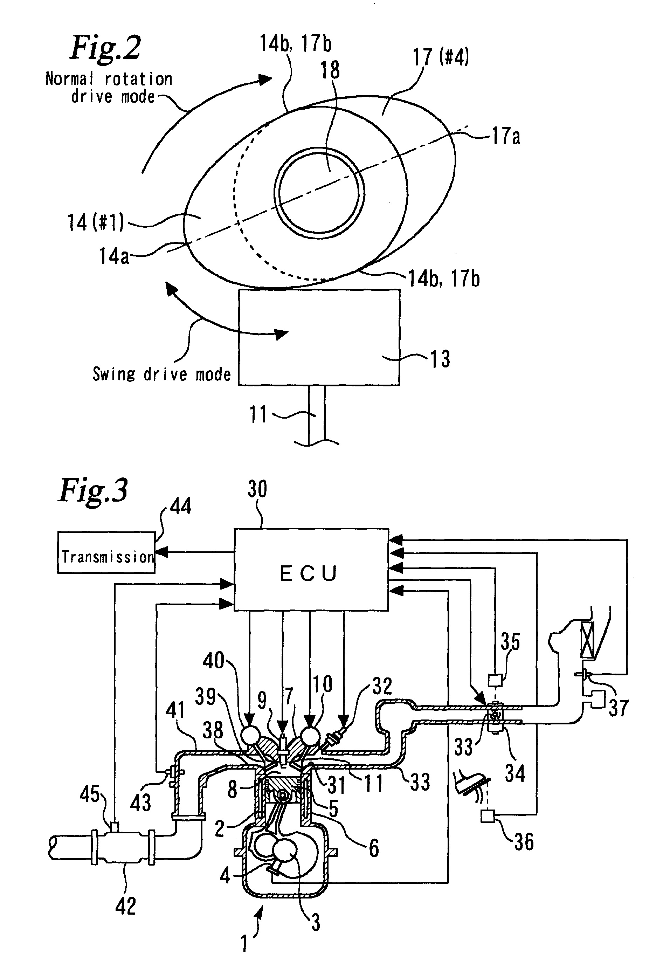

Fig. 2 is an axial view of the first camshaft 18 shown in Fig. 1. As shown in Fig. 2, the two cams 14, 17 mounted on the first camshaft 18 are arranged so that their cam noses 14a, 17a are positioned 180° apart from each other in the circumferential direction of the first camshaft 18. The two cams 14, 17 are shaped the same and symmetrical with respect to a straight line passing through the cam center and cam nose.
There are two drive modes for the cams 14, 17: normal rotation drive mode and swing drive mode. In the normal rotation drive mode, the first motor 22 continuously rotates in one direction to continuously rotate the cams 14, 17 in a normal rotation direction. In the swing drive mode, on the other hand, the first motor 22 changes its rotation direction during a lift of the intake valve 11 to reciprocate the cams 14, 17.
Although the two cams 15, 16 mounted on the second camshaft 19 are not shown in the figure and will not be described in detail, these two cams 15, 16 are also arranged so that their cam noses 15a, 16a are positioned 180° apart from each other in the circumferential direction of the second camshaft 19. Further, the second motor 26 can exercise drive control over these cams 14, 17 to place them in either the normal rotation drive mode or swing drive mode.

### [Configuration of Engine]

Fig. 3 illustrates the configuration of the engine 1 in which the variable valve mechanism 10 shown in Fig. 1 is mounted. The engine 1 has a cylinder block 6, which includes a piston 5. The piston 5 is connected to the crankshaft 3 through a crank mechanism. A crank angle sensor 4, which detects the rotation angle of the crankshaft 3, is installed near the crankshaft 3.

A cylinder head 7 is attached to the top of the cylinder block 6. The cylinder head 7 includes an ignition plug 9, which ignites an air-fuel mixture in a combustion chamber 8. The cylinder head 7 has an intake port 31 that communicates with the combustion chamber 8. The aforementioned intake valve 11 is positioned in the joint between the intake port 31 and combustion chamber 8. The intake valve 11 is connected to the above-mentioned variable valve mechanism 10. An injector 32 is installed near the intake port 31 to inject fuel into the neighborhood of the intake port 31.

The intake port 31 is connected to an intake path 32. A throttle valve 33 is installed in the middle of the intake path 32. The throttle valve 33 is an electronically controlled valve that is driven by a throttle motor 34. The throttle valve 33 is driven in accordance with an accelerator angle AA, which is detected by an accelerator angle sensor 36. A throttle angle sensor 35 is installed near the throttle valve 33 to detect a throttle angle TA. An air flow meter 37 is installed upstream of the throttle valve 33. The air flow meter 37 is configured to detect an intake air amount Ga.

The cylinder head 7 also includes an exhaust port 38, which communicates with the combustion chamber 8. An exhaust valve 39 is mounted in the joint between the exhaust port 38 and combustion chamber 8. The exhaust valve 39 is connected to a variable valve mechanism 40 that has the same configuration as the aforementioned variable valve mechanism 10. The exhaust port 38 is connected to an exhaust path 41. A catalyst 42 is installed in the exhaust path 41 to purify exhaust gas.
An air-fuel ratio sensor 43 is installed upstream of the catalyst 42 to detect an exhaust air-fuel ratio. The catalyst 42 includes a catalyst bed temperature sensor 45, which detects a catalyst bed temperature.

The ECU 30 has its output end connected, for instance, to the ignition plug 9, injector 32, throttle motor 34, and transmission 44 in addition to the aforementioned motors 22, 26. The transmission 44 may be either an automatic transmission or a continuously variable transmission. The ECU 30 has its input end connected, for instance, to the crank angle sensor 4, throttle angle sensor 35, accelerator angle sensor 36, air flow meter 37, air-fuel ratio sensor 43, and catalyst bed temperature sensor 45. The ECU 30 calculates an engine speed (also hereinafter referred to as the "engine revolution speed") NE in accordance with an output from the crank angle sensor 4.

### [Configuration of Hybrid Vehicle System]

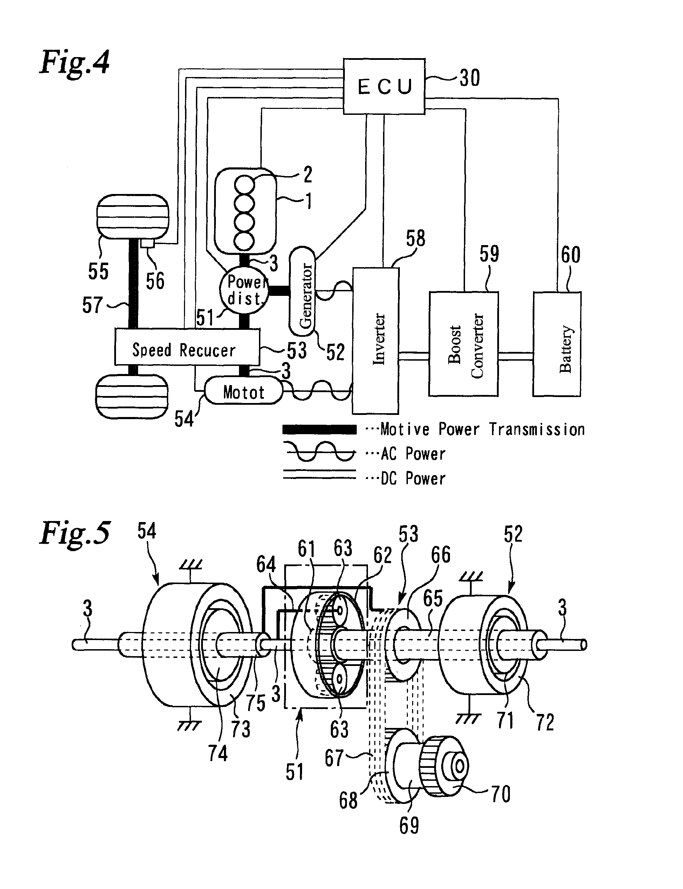

The power supply infrastructure of a hybrid vehicle system can be used to drive the above-mentioned motors 22, 26. Fig. 4 illustrates the configuration of a hybrid vehicle system according to the first embodiment of the present invention. The hybrid vehicle system shown in Fig. 4 includes the aforementioned engine 1, which is one driving source, and two other driving sources, namely, a motor generator (hereinafter referred to as the "generator") 52 and a motor generator (hereinafter referred to as the "motor") 54.

As shown in Fig. 4, the hybrid vehicle system includes a triaxial power distribution mechanism 51. The power distribution mechanism 51 is a later-described planetary gear mechanism. The power distribution mechanism 51 is connected to the generator 52 and motor 54 in addition to the crankshaft 3 of the aforementioned engine 1. The power distribution mechanism 51 is also connected to a speed reducer 53. The speed reducer 53 is connected to a rotation shaft 57 of a driving wheel 55. The driving wheel 55 is provided with a wheel speed sensor 56. The wheel speed sensor 56 is configured to detect the number of revolutions or the rotation speed of the driving wheel 55.

The generator 52 and motor 54 are connected to a common inverter 58. The inverter 58 is connected to a boost converter 59. The boost converter 59 is connected to a battery 60. The boost converter 59 converts the voltage (e.g., 201.6 VDC) of the battery 60 to a high voltage (e.g., 500 VDC). The inverter 58 converts the high DC voltage, which is generated by the boost converter 59, to an AC voltage (e.g., 500 VAC). The generator 52 and motor 54 exchange electrical power with the battery 60 through the inverter 58 and boost converter 59.

As shown in Fig. 4, the ECU 30 is connected not only to the aforementioned engine 1 but also, for instance, to the power distribution mechanism 51, generator 52, speed reducer 53, motor 54, wheel speed sensor 56, inverter 58, boost converter 59, and battery 60. The ECU 30 controls the drive amount or power generation amount of the generator 52 and motor 54. The ECU 30 also acquires information about the state of charge (SOC) of the battery 60.

### [Essential Part Configuration of Drive Mechanism]

Fig. 5 is a perspective view illustrating the essential part configuration of a drive mechanism in the hybrid vehicle system shown in Fig. 4.
As shown in Fig. 5, the power distribution mechanism 51 includes a sun gear 61, a ring gear 62, a plurality of pinion gears 63, and a carrier 64. The sun gear 61, which is an external gear, is fastened to a hollow sun gear shaft 65. The crankshaft 3 of the engine 1 runs through the hollow of the sun gear shaft 65. The ring gear 62, which is an internal gear, is concentric with the sun gear 61. The plurality of pinion gears 63 are positioned so as to engage with both the sun gear 61 and ring gear 62. The pinion gears 63 are rotatably retained by the carrier 64. The carrier 64 is coupled to the crankshaft 3. In other words, the power distribution mechanism 51 is a planetary gear mechanism that performs a differential operation by using the sun gear 61, ring gear 62, and pinion gears 63 as rotational elements.

The speed reducer 53 includes a motive power outputting gear 66, which is used for transmitting motive power. The motive power outputting gear 66 is coupled to the ring gear 62 of the power distribution mechanism 51. The motive power outputting gear 66 is also coupled to a power transmission gear 68 through a chain 67. The power transmission gear 68 is coupled to a gear 70 through a rotation shaft 69. The gear 70 is coupled to a differential gear (not shown) that rotates the rotation shaft 57 of the driving wheel 55.

The generator 52 includes a rotor 71 and a stator 72. The rotor 71 is mounted on the sun gear shaft 65, which rotates together with the sun gear 61. The generator 52 is configured so that it can be driven not only as an electric motor for rotating the rotor 71 but also as a power generator for generating electromotive force by using the rotation of the rotor 71. Further, the generator 52 functions as a starter at engine startup.

The motor 54 includes a rotor 73 and a stator 74. The rotor 73 is mounted on a ring gear shaft 75, which rotates together with the ring gear 62. The motor 54 is configured so that it not only can function as an electric motor for rotating the rotor 73 but can also be driven as a power generator for generating electromotive force by using the rotation of the rotor 73.

The power distribution mechanism 51 can distribute the motive power of the engine 1, which is input from the carrier 64, to the sun gear 61, which is connected to the generator 52, and to the ring gear 62, which is connected to the rotation shaft 57, in accordance with their gear ratio. The power distribution mechanism 51 can also combine the motive power of the engine 1, which is input from the carrier 64, and the motive power of the generator 52, which is input from the sun gear 61, and output the combined motive power to the ring gear 62. Further, the power distribution mechanism 51 can combine the motive power of the generator 52, which is input from the sun gear 61, and the motive power input from the ring gear 62, and output the combined motive power to the carrier 64.

The ECU 30 calculates the torque required for the overall vehicle in accordance with the rotation speed of the driving wheel 55, which is detected by the wheel speed sensor 56, and the accelerator angle AA, which is detected by the accelerator angle sensor 36. To obtain the torque required for the overall vehicle, the ECU 30 distributes driving force to the engine 1, generator 52, and motor 54 while considering the state of charge (SOC) of the battery 60. In other words, the ECU 30 calculates the torque required for the engine 1 (hereinafter referred to as the "required engine torque") and the torque required for the generator 52 and motor 54.
The ECU 30 can provide improved fuel efficiency by stopping the engine 1 during deceleration, braking, or low-speed rotation (e.g., at a rotation speed of lower than 1000 rpm).

### [Features of First Embodiment]

The variable valve mechanism 10 described above uses the motors 22, 26 to rotate the camshafts 18, 19. The motor rating is determined so as to support the load imposed on the motors. The load imposed on the motors includes, for instance, valve spring reaction force, camshaft rotary inertia force, and friction torque. The spring reaction force, in particular, greatly affects the motor size and rating.

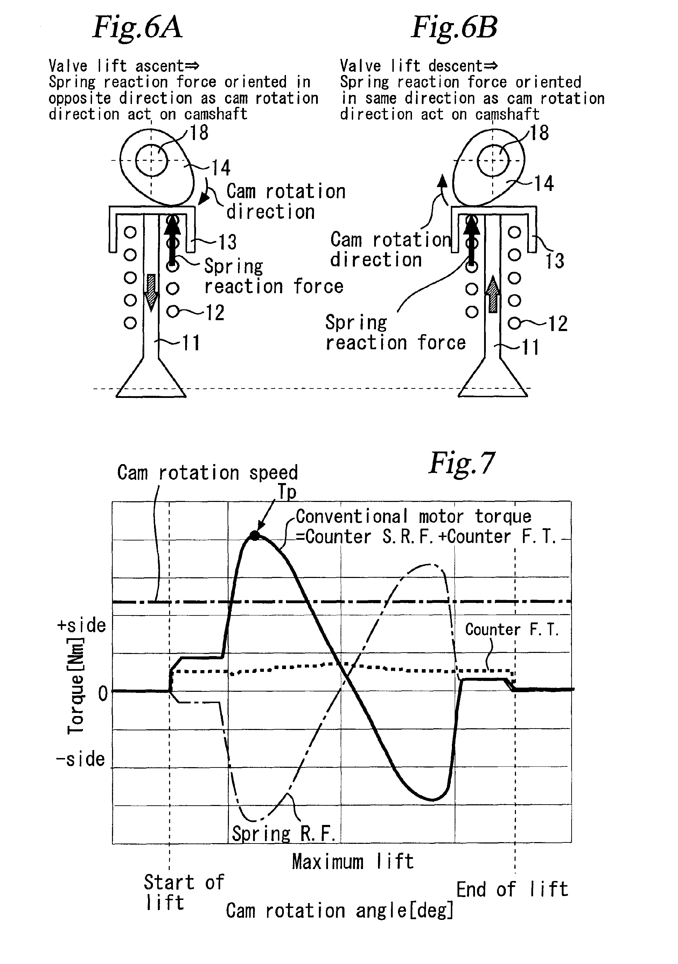

Figs. 6A and 6B illustrate the spring reaction force that acts on a camshaft during a valve lift. More specifically, Fig. 6A shows the spring reaction force that acts during a valve lift ascent, whereas Fig. 6B shows the spring reaction force that acts during a valve lift descent. For the sake of brevity, the cam 17 mounted on the camshaft 18 is not shown in the figures or described below.

During a valve lift ascent (for valve opening), the cam 14 pushes down a valve spring 12 as shown in Fig. 6A. Therefore, the spring reaction force oriented in a direction opposite the rotation direction of the cam 14 (hereinafter referred to as the "cam rotation direction") acts on the camshaft 18.

During a valve lift descent (for valve closing), on the other hand, the spring reaction force of the valve spring 12 pushes the cam 14 as shown in Fig. 6B. Therefore, the spring reaction force oriented in the same direction as the cam rotation direction acts on the camshaft 18.

Meanwhile, the motors 22, 26 provide phase control over the cam. It means that the rotation of the cam is synchronized with that of the crankshaft. Conventionally, control is exercised to provide a constant cam rotation speed (half the engine speed NE).

Fig. 7 illustrates the motor torque to be generated when the cam rotation speed is constant. When control is exercised to provide a constant cam rotation speed, it is necessary, as shown in Fig. 7, that a motor generate torque opposing the aforementioned spring reaction force (hereinafter referred to as the "counter-spring-reaction-force torque"). In this instance, the motor torque is the sum of the counter-spring-reaction-force torque and friction torque. When the counter-spring-reaction-force torque is to be generated with a motor, the power consumption of the motor increases. Thus, a high motor rating is required.

According to Patent Document 1 described above, the use of a torque reduction mechanism reduces the spring torque (spring reaction force). However, the addition of the torque reduction mechanism entails a cost increase. It should also be noted that the use of the torque reduction mechanism results in increased friction torque.

Under the above circumstances, the first embodiment increases the rotary inertia force of the camshaft 18 (hereinafter referred to as the "camshaft rotary inertia force") before the start of a valve lift, as described in detail below. The camshaft rotary inertia force is employed to cancel the spring reaction force of the valve spring 12.

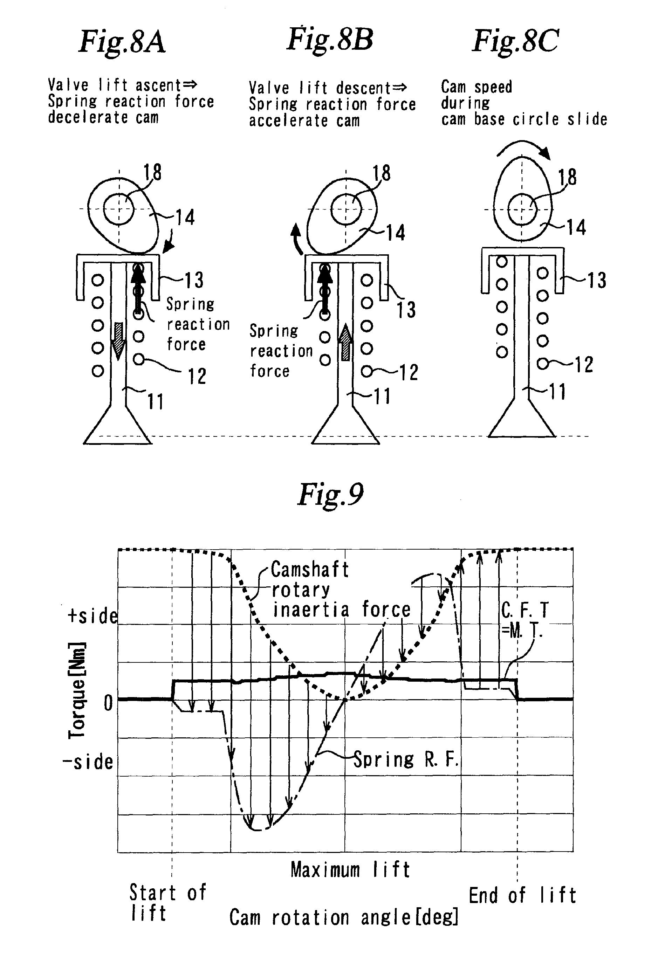

Figs. 8A to 8C illustrate how the spring reaction force acting on the camshaft affects the cam speed in the first embodiment. Fig. 9 shows how the camshaft rotary inertia force changes in the first embodiment.
First of all, as shown in Fig. 9, the camshaft rotary inertia force is increased to a value equal to or more than a predetermined value (e.g., 2 Nm) before the start of a lift. The predetermined value represents the camshaft rotary inertia force that can achieve a valve lift without causing the motor to generate the counter-spring-reaction-force torque during a valve lift.

During a valve lift ascent (during the time interval between the instant at which the lift starts and the instant at which the maximum lift is provided), the spring reaction force oriented in a direction opposite the direction of cam rotation acts on the camshaft 18 as shown in Fig. 8A. In this instance, the motor is not required to generate the counter-spring-reaction-force torque. In other words, the motor does not generate the counter-spring-reaction-force torque. Then, the spring reaction force reduces the cam rotation speed. In other words, the spring reaction force works as deceleration torque for the camshaft rotary inertia force.
Consequently, the camshaft rotary inertia force gradually decreases from the aforementioned predetermined value as shown in Fig. 9.

During a subsequent valve lift descent (during the time interval between the instant at which the maximum lift is provided and the instant at which the lift is terminated), the spring reaction force oriented in the same direction as the direction of cam rotation acts on the camshaft 18 as shown in Fig. 8B. In this instance, the motor is not required to generate the counter-spring-reaction-force torque either as is the case with the valve lift ascent described above. The spring reaction force then increases the cam rotation speed. In other words, the spring reaction force works as acceleration torque for the camshaft rotary inertia force.
Consequently, the camshaft rotary inertia force gradually increases and reaches the aforementioned predetermined value at the end of the lift, as shown in Fig. 9.

During a subsequent cam base circle slide, the cam rotation speed is controlled and rendered equal to the engine speed NE x 1/2 + correction term α in order to synchronize the cam rotation phase with the rotation of the crankshaft 3 as shown in Fig. 8C. Further, since the cam 14 does not come into contact with a valve lifter 13 during a cam base circle slide, the spring reaction force does not act on the camshaft 18. In this instance, therefore, the motor is not required to generate the counter-spring-reaction-force torque either. Consequently, the camshaft rotary inertia force is kept constant as shown in Fig. 9.

As described above, the camshaft rotary inertia force cancels the spring reaction force in the first embodiment. During the interval between the start of a lift and the end of the lift, therefore, it is necessary that only the counter-friction torque be generated by the motor as shown in Fig. 9. This makes it possible to reduce the power consumption and rating of the motor.

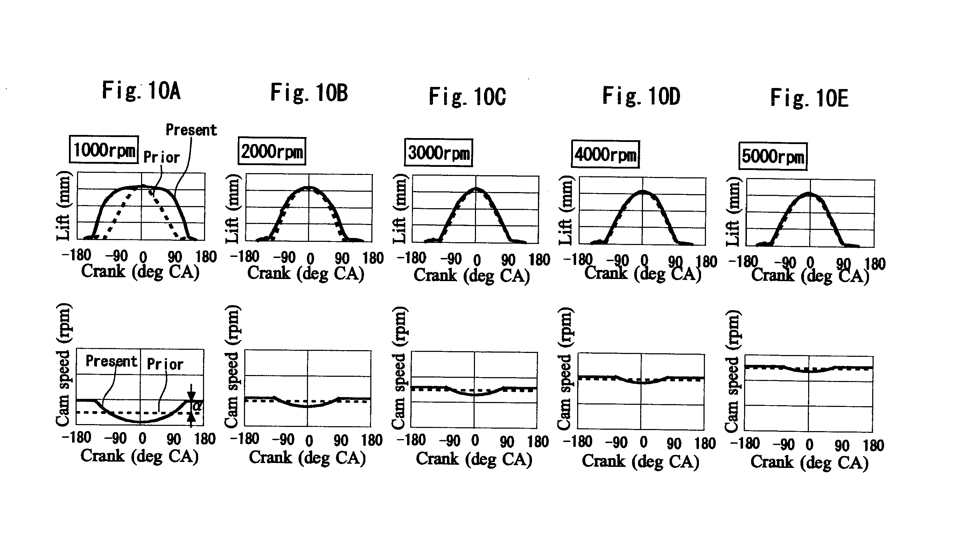

Figs. 10A to 10E show valve lift characteristics and cam rotation speed changes at various engine speeds in the first embodiment. More specifically, Fig. 10A shows valve lift characteristics and cam rotation speed changes at an engine speed NE of 1000 rpm; Fig. 10B shows the same at an engine speed NE of 2000 rpm; Fig. 10C shows the same at an engine speed NE of 3000 rpm; Fig. 10D shows the same at an engine speed NE of 4000 rpm; and Fig. 10E shows the same at an engine speed NE of 5000 rpm. In Figs. 10A to 10E, a curve marked "Conventional" represents a case where control is exercised so that the cam rotation speed is half the engine speed NE at all times.

When the engine speed NE is 1000 rpm (that is, when the engine speed is low), the cam rotation speed and camshaft rotation speed are lower than when the engine speed is high, as indicated in the upper half of Fig. 10A. The camshaft rotary inertia force is, therefore, smaller at a low engine speed than at a high engine speed. Thus, the spring reaction force changes the cam rotation speed by a greater amount at a low engine speed. As a result, the operating angle becomes larger and the lift curve becomes deformed as compared to those in a conventional case.

The first embodiment controls the motor position so as to obtain the indicated lift curves. More concretely, lift curve maps indicated in the upper halves of Figs. 10A to 10E are prepared for various engine speeds NE. Further, the motor position is controlled so that the valve lift amount changes in accordance with a lift curve map for a particular engine speed NE. The indicated lift curves are lift curves that are obtained when the motor torque is minimized, that is, when the spring reaction force is completely cancelled by the camshaft rotary inertia force.

When the motor is driven so as to obtain the lift curves shown in the upper half of Fig. 10A, the cam rotation speed changes as indicated in the lower half of Fig. 10A. The cam rotation speed attained during a cam base circle slide before the start of a valve lift is approximately 900 rpm. Therefore, the correction term α shown in Fig. 8C is 900 rpm - 500 rpm = 400 rpm. The cam rotation speed attained when the maximum lift is provided is 100 rpm.

Further, an increase in the engine speed NE reduces not only the difference between conventional lift curves and lift curves according to the present invention but also the correction term α for the cam rotation speed.

As described above, the first embodiment can reduce the spring reaction force between the start and end of a lift by allowing the camshaft rotary inertia force to cancel the spring reaction force. Thus, only the counter-friction torque becomes the motor toque during a valve lift. Consequently, the power consumption and rating of the motor can be reduced. This makes it possible to drive the motor with only the power supply for a normal engine system and without having to use the power supply infrastructure of a hybrid system.

Further, the first embodiment can reduce the power consumption and rating of the motor without using a torque reduction mechanism disclosed, for instance, in Patent Document 1 described above. This makes it possible to achieve cost reduction and avoid an increase in the friction torque.

### (Modifications)

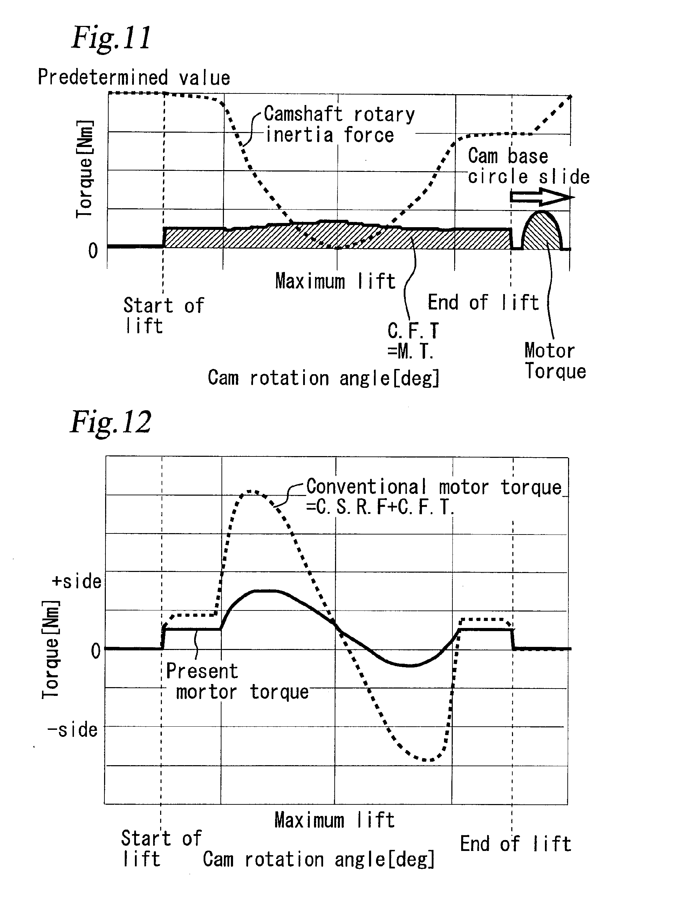

A first modification of the first embodiment will now be described with reference to Fig. 11.
In the first embodiment, the cam rotation speed is constant during a cam base circle slide (see Figs. 10A to 10E); therefore, the camshaft rotary inertia force is also constant. However, the camshaft rotary inertia force may be increased during a cam base circle slide.
Fig. 11 is a drawing for describing the first modification of the first embodiment. More specifically, Fig. 11 shows a case where the camshaft rotary inertia force is increased during a cam base circle slide. As shown in Fig. 11, the camshaft rotary inertia force is equal to the predetermined value at the start of a lift, but smaller than the predetermined value at the end of a lift.
To further reduce the power consumption and rating of the motor, the first modification generates a motor torque so that the camshaft rotary inertia force reaches the predetermined value during a cam base circle slide after the end of a lift. Since the spring reaction force does not act on the camshaft during a cam base circle slide, a small motor torque can increase the camshaft rotary inertia force to the predetermined value. This makes it possible to reduce the motor rating.

Further, the motor may be required to generate torque during a lift so that the camshaft rotary inertia force reaches the predetermined value at the end of a lift. This causes the motor to generate the counter-spring-reaction-force torque during a lift as in a conventional manner. In marked contrast to the conventional case, however, part of the spring reaction force is cancelled by the camshaft rotary inertia force. Therefore, the counter-spring-reaction-force torque required to the motor to generate is smaller than in the conventional case. As a result, the power consumption and rating of the motor can be made lower than in the conventional case.

Fig. 12 illustrates a second modification of the first embodiment.
In the first embodiment, the spring reaction force and camshaft rotary inertia force are completely cancelled.
In the second modification, the value (the predetermined value) representing the camshaft rotary inertia force exerted before the start of a valve lift is set to be smaller than indicated in Fig. 9. Therefore, the camshaft rotary inertia force does not cancel the entire spring reaction force; however, part of the camshaft rotary inertia force is cancelled. The counter-spring-reaction-force torque, which is against the spring reaction force that is not cancelled, is required to the motor to generate. Therefore, the motor torque according to the second modification is the sum of the counter-spring-reaction-force torque and friction torque as shown in Fig. 12. The second modification provides a motor torque that is smaller than a conventional motor torque, as shown in Fig. 12. Consequently, the power consumption and rating of the motor can be made lower than in the conventional case.

In the first embodiment and its modifications, the engine 1 corresponds to the "internal combustion engine" according to the first aspect of the present invention; the variable valve mechanism 10 corresponds to the "variable valve mechanism" according to the first aspect of the present invention; and the ECU 30 corresponds to the "control means" according to the first to fifth aspects and the ninth to twelfth aspects of the present invention. Further, in the first embodiment and its modifications, the valve spring 12 corresponds to the "valve spring" according to the first aspect of the present invention; the valve 11 corresponds to the "valve" according to the first aspect of the present invention; the cams 14-17 correspond to the "cam" according to the first aspect of the present invention; the camshafts 18, 19 correspond to the "camshaft" according to the first aspect of the present invention; and the electric motors 22, 26 correspond to the "electric motor" according to the first aspect of the present invention.

### Second Embodiment

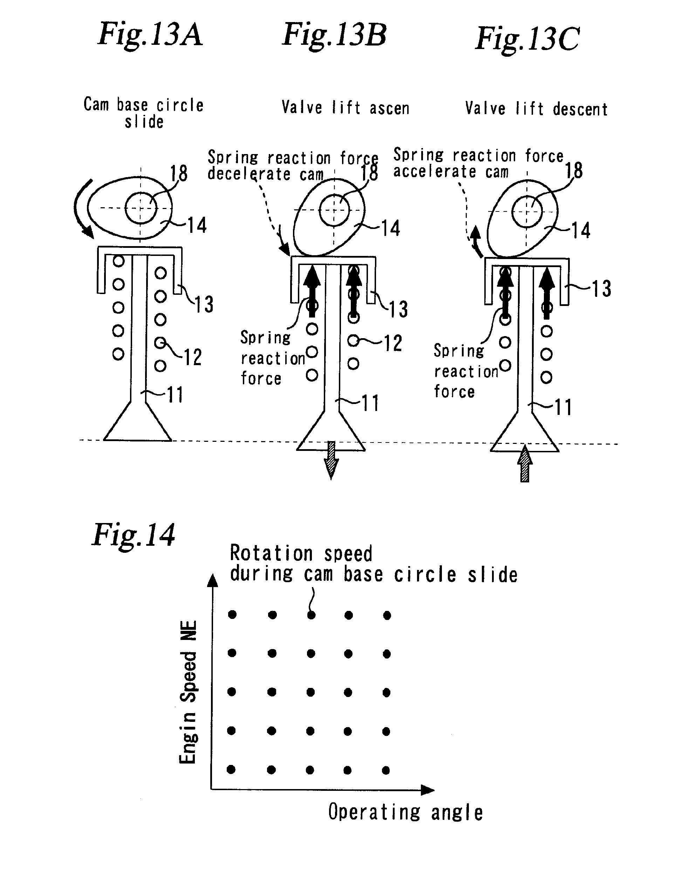

A second embodiment of the present invention will now be described with reference to Figs. 13 to 16.
The hardware shown in Figs. 1 to 5 can be used as a system according to the second embodiment.

### [Features of Second Embodiment]

The first embodiment has been described in conjunction with a case where the cams 14-17 are driven in the normal rotation drive mode. On the other hand, the second embodiment will be described in conjunction with a case where the cams 14-17 are driven in the swing drive mode. As described with reference to Fig. 2, the above system can be used to execute the swing drive mode.

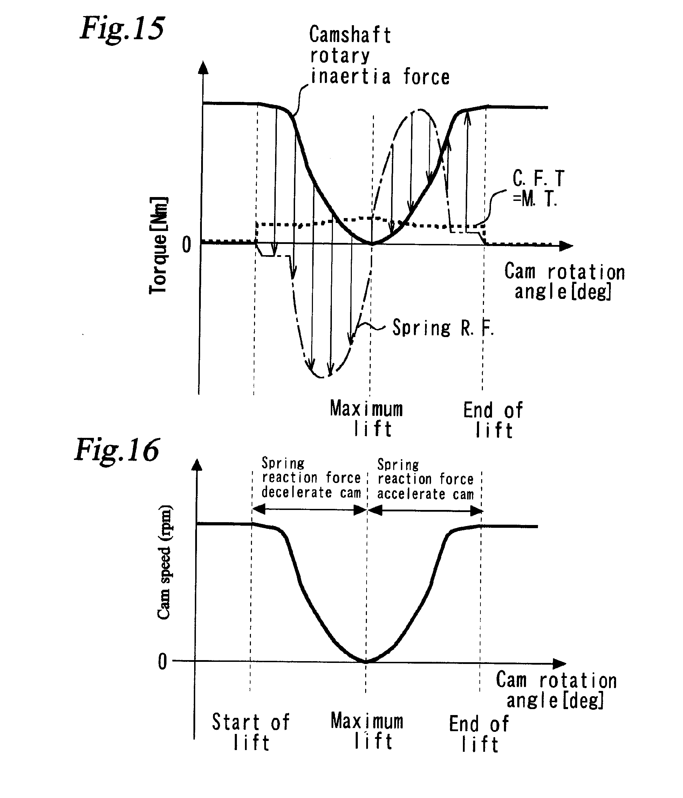

Figs. 13A to 13C illustrate how the spring reaction force acting on a camshaft acts on the cam speed in the second embodiment. Fig. 14 shows a map that defines a target value for the cam rotation speed during a cam base circle slide. Fig. 15 shows how the camshaft rotary inertia force changes in the second embodiment. Fig. 16 shows how the cam rotation speed changes in the second embodiment.

During a cam base circle slide shown in Fig. 13A, that is, before the cam 14 comes into contact with the valve lifter 13, the cam rotation speed is raised to a target value. The map shown, for instance, in Fig. 14 is referenced to determine the target value in accordance with the operating angle and engine speed NE. The camshaft rotary inertia force is then increased, as shown in Fig. 15, to a value equal to or more than the predetermined value before the start of a lift as is the case with the first embodiment.

During a subsequent valve lift ascent (from a lift starts to the maximum lift), the spring reaction force oriented in a direction opposite the direction of cam rotation acts on the camshaft 18 as shown in Fig. 13B. In this instance, the motor is controlled so as not to generate the counter-spring-reaction-force torque. The spring reaction force then reduces the cam rotation speed as shown in Fig. 16. In other words, the spring reaction force works as deceleration torque for the camshaft rotary inertia force. Consequently, the camshaft rotary inertia force gradually decreases from the aforementioned predetermined value as shown in Fig. 15.

During a subsequent valve lift descent (from the maximum lift to a termination of the lift), the spring reaction force oriented in the same direction as the direction of cam rotation acts on the camshaft 18 as shown in Fig. 13C. In the second embodiment, the cam 14 is driven in the swing drive mode; therefore, the cam rotates in a direction opposite the cam rotation direction shown in Fig 13B. In this instance, the motor is controlled so as not to generate the counter-spring-reaction-force torque either as is the case with the valve lift ascent described above. The spring reaction force then increases the cam rotation speed as shown in Fig. 16. Fig. 16 shows the cam rotation speed relative to the cam rotation direction. Since the spring reaction force works as acceleration torque for the camshaft rotary inertia force, the camshaft rotary inertia force gradually increases.

In the second embodiment, the camshaft rotary inertia force cancels the spring reaction force as described above. Therefore, only the counter-friction torque needs to be generated by the motor, as shown in Fig. 15, during the interval between the start and end of a lift. This makes it possible to reduce the power consumption and rating of the motor.

As described above, the second embodiment can reduce the spring reaction force during the interval between the start and end of a lift by allowing the camshaft rotary inertia force to cancel the spring reaction force even in the swing drive mode. Therefore, the second embodiment provides the same advantages as the first embodiment, which has been described earlier.

### Third Embodiment

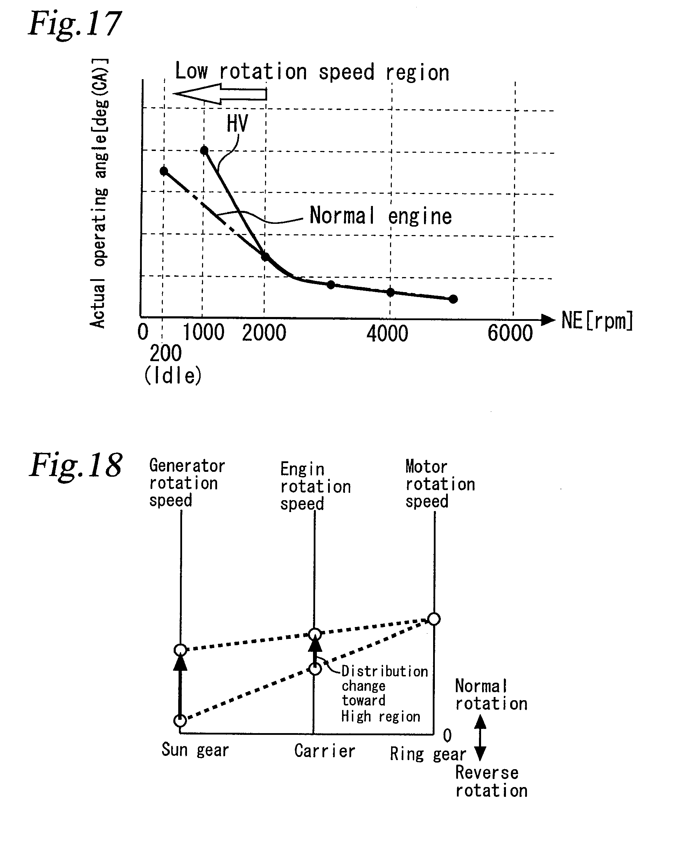

A third embodiment of the present invention will now be described with reference to Figs. 17 and 18.
The hardware shown in Figs. 1 to 5 can be used as a system according to the third embodiment.

### [Features of Third Embodiment]

In a low rotation speed region where, for example, the engine speed NE is equal to or lower than 2000 rpm, the camshaft rotary inertia force is smaller than in a high rotation speed region. Therefore, in a case where the camshaft rotary inertia force is employed to cancel the spring reaction force as in the present invention, change amount in the camshaft rotary inertia force due to the spring reaction force becomes large. In such an instance, the actual operating angle is larger in the low rotation speed region than in the high rotation speed region as indicated in Figs. 10A to 10E and Fig. 17. Fig. 17 shows the relationship between the engine speed NE and actual operating angle. In an example shown in Fig. 17, the employed cam has a base circle that provides an operating angle of 210° when the cam is rotationally driven at a constant speed. In the example shown in Fig. 17, the actual operating angle is increased to 280° when the engine speed NE is 1000 rpm.

A solid line in Fig. 17 shows how the actual operating angle changes when the variable valve mechanism 10 is mounted in the hybrid vehicle engine 1 shown in Fig. 4. A one-dot chain line in Fig. 17, on the other hand, shows how the actual operating angle changes when the variable valve mechanism 10 is mounted in a normal engine that has no driving source other than an engine. When the variable valve mechanism 10 is mounted in a normal engine, provision is made so as not to exceed a maximum actual operating angle of 270° that allows an air-fuel mixture to be ignited during idling (200 rpm).

Meanwhile, when the actual operating angle increases, the Atkinson cycle is implemented so that the fuel efficiency improves, although the torque decreases. If, in this instance, a great driving force is requested in such a low rotation speed region, the driving force may not be generated in compliance with such a driving force request.

As such being the case, the third embodiment shifts the engine speed NE toward a high rotation speed side if the requested driving force is equal to or more than a predetermined value while the engine speed is in a low rotation speed region. Fig. 18 is a collinear drawing for describing a distribution change operation that the power distribution mechanism 51 performs when the engine speed NE is to be shifted toward a high rotation speed side. As indicated in Fig. 18, increasing the amount of power supply to the generator 52 increases the rotation speed of the sun gear 61. This makes it possible to shift the engine speed NE toward a high rotation speed side.
The actual operating angle can be made smaller than in a low rotation speed region by shifting the engine speed NE toward a high rotation speed side. Therefore, an actual compression ratio can be increased to increase the torque. Consequently, the driving force can be generated in compliance with a driving force request even when a great driving force is requested.

### (Modification)

In the third embodiment, the power distribution mechanism 51 shifts the engine speed NE toward a high rotation speed side. Alternatively, however, the engine speed NE may be shifted toward a high rotation speed side by controlling the speed reduction ratio of the speed reducer 44. Even when the ECU 30 exercises speed reduction ratio control, the actual compression ratio can be increased; therefore, it is possible to provide the same advantages as the third embodiment.

In the third embodiment and its modification, the power distribution mechanism 51 and transmission 44 correspond to the "engine speed change means" according to the sixth aspect of the present invention.

### Fourth Embodiment

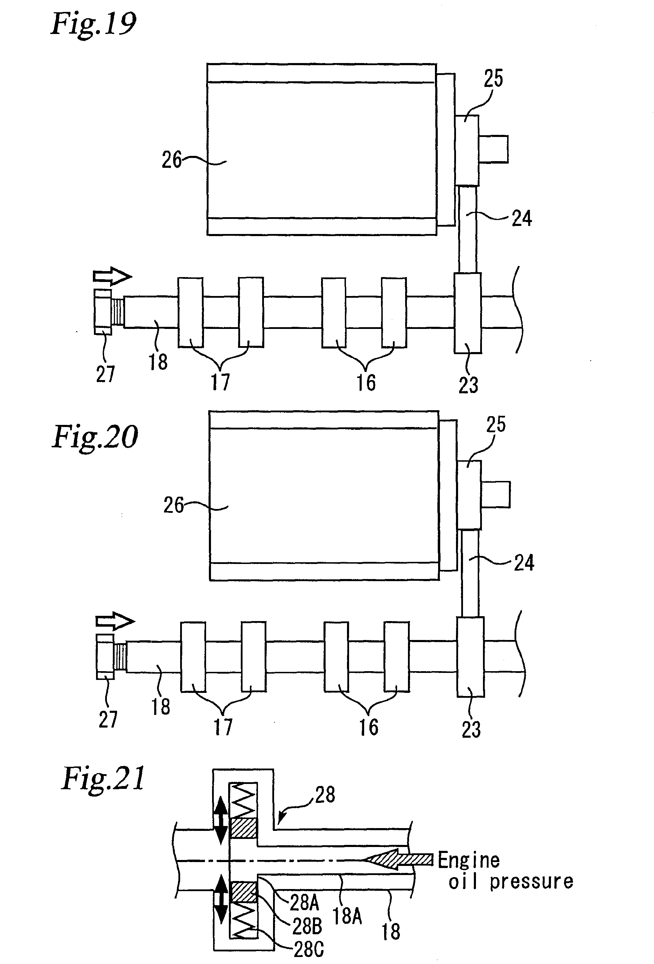

A fourth embodiment of the present invention will now be described with reference to Fig. 19.
Fig. 19 shows an inertia force increase section provided in a cam drive system according to the fourth embodiment. As shown in Fig. 18, the cam drive system includes the camshaft 18, gears 23, 24, 25, and motor 26. In the fourth embodiment, a weight 27 is attached to an end of the camshaft 18 as shown in Fig. 18.

### [Features of Fourth Embodiment]

As described in conjunction with the third embodiment, when the camshaft rotary inertia force is employed to cancel the spring reaction force as in the present invention, the amount of camshaft rotary inertia force change increases in a low rotation speed region. As a result, the enlargement range for the actual operating angle is greater in the low rotation speed region than in the high rotation speed region.

As regards an engine that places emphasis on fuel efficiency in the low rotation speed region, the Atkinson cycle is implemented; therefore, no particular problem arises no matter whether the enlargement range for the actual operating angle is great. For an engine that places emphasis on torque in the low rotation speed region, on the other hand, it is preferred that the enlargement range for the actual operating angle be minimized to obtain the actual compression ratio.

Meanwhile, if the camshaft rotary inertia force can be increased, change in the camshaft rotary inertia force during a valve lift caused by the spring reaction force decreases. As a result, the enlargement range for the actual operating angle can be reduced.

In the fourth embodiment, the weight 27 is attached to an end of the camshaft 18. The addition of the weight 27 provides a greater camshaft rotary inertia force than when the weight 27 is not added. Therefore, the enlargement range for the actual operating angle in the low rotation speed region can be made smaller than when the weight 27 is not added. Consequently, the actual compression ratio can be obtained in the low rotation speed region as well. This makes it possible to obtain an adequate torque.

Further, the heavier the weight 27, the smaller the amount of camshaft rotary inertia force change, and thus the smaller the enlargement range for the actual operating angle in the low rotation speed region. Therefore, a desired torque (according to a design value) can be obtained in the low rotation speed region by adjusting the weight of the weight 27.

### (Modifications)

In the fourth embodiment, the weight 27 is attached to an end of the camshaft 18. However, the weight 27 may alternatively be attached to an end of a motor drive shaft 26A as shown in Fig. 20. Fig. 20 shows the inertia force increase section for the cam drive system according to a modification of the fourth embodiment. Another alternative would be to attach the weight 27 to the gears 23, 24, 25. These modifications provide the same advantages as the fourth embodiment because they can reduce the amount of camshaft rotary inertia force change during a valve lift.

Further, the spring constant of the valve spring 12 may be greater than its design value. In such an instance, it may not be possible to minimize the motor torque by exercising motor control so as to obtain the lift curves shown in the upper halves of Figs. 10A to 10E. In other words, the actual spring reaction force may be greater than the spring reaction force calculated in accordance with the design value. Therefore, complete cancel may not be provided by the camshaft rotary inertia force. Then, it may be necessary to require the motor to generate the counter-spring-reaction-force torque during a valve lift. Consequently, adding the weight 27 causes the camshaft rotary inertia force increase, thereby being capable of minimizing the motor torque when the spring constant is greater than its design value.

In the fourth embodiment and its modifications, the camshaft 18, gears 23, 24, 25, and motor 26 correspond to the "cam drive system" according to the seventh aspect of the present invention; and the weight 27 corresponds to the "inertia force increase section" according to the seventh aspect of the present invention.

### Fifth Embodiment

A fifth embodiment of the present invention will now be described with reference to Fig. 21.
Fig. 21 shows an inertia force change mechanism according to the fifth embodiment of the present invention. As shown in Fig. 21, the inertia force change mechanism 28 is mounted on the outer circumference of the camshaft 18. The inertia force change mechanism 28 includes an oil passage 28A, which communicates with an oil passage 18A in the camshaft 18. A weight 28B is positioned in the oil passage 28A. The oil passage 28A is provided with a spring 28C that biases the weight 28B toward the inside of the camshaft 18 (toward the center).

If the hydraulic pressure applied to the oil passage 28A through the oil passage 18A is smaller than the biasing force of the spring 28C, the weight 28B is biased toward the inside of the camshaft 18. If, on the other hand, the hydraulic pressure applied to the oil passage 28A is greater than the biasing force of the spring 28C, the weight 28B moves outward.

### [Features of Fifth Embodiment]

The power consumption and rating of the motor can be reduced by allowing the camshaft rotary inertia force to cancel the spring reaction force as described above.

Meanwhile, the variable valve mechanism 10 shown in Fig. 1 can control the camshaft rotation speed without regard to the crankshaft 3, thereby can change the operating angle.

However, when the motor rating is reduced, no more extra motor torque exists so that it may be impossible to change the operating angle particularly in the low rotation speed region. Further, if an attempt is made to obtain extra motor torque, the motor rating becomes as high as in the conventional case.

Therefore, when the operating angle is to be decreased within the low rotation speed region, the fifth embodiment moves the weight 28B outward by applying engine oil pressure to the oil passage 28A. The camshaft rotary inertia force can then be increased. This makes it possible to reduce the aforementioned enlargement range for the actual operating angle and switch to a small operating angle.

When, on the other hand, the operating angle is to be increased within the low rotation speed region, the fifth embodiment moves the weight 28B inward by applying no engine oil pressure to the oil passage 28A. The camshaft rotary inertia force can then be decreased. This makes it possible to increase the aforementioned enlargement range for the actual operating angle and switch to a large operating angle.
Consequently, even when the motor rating is low, the fifth embodiment can change the camshaft rotary inertia force by repositioning the weight 28B. As a result, the operating angle can be changed.

In the fifth embodiment, the inertia force change mechanism 28 corresponds to the "inertia force change mechanism" according to the eighth aspect of the present invention.

### Sixth Embodiment

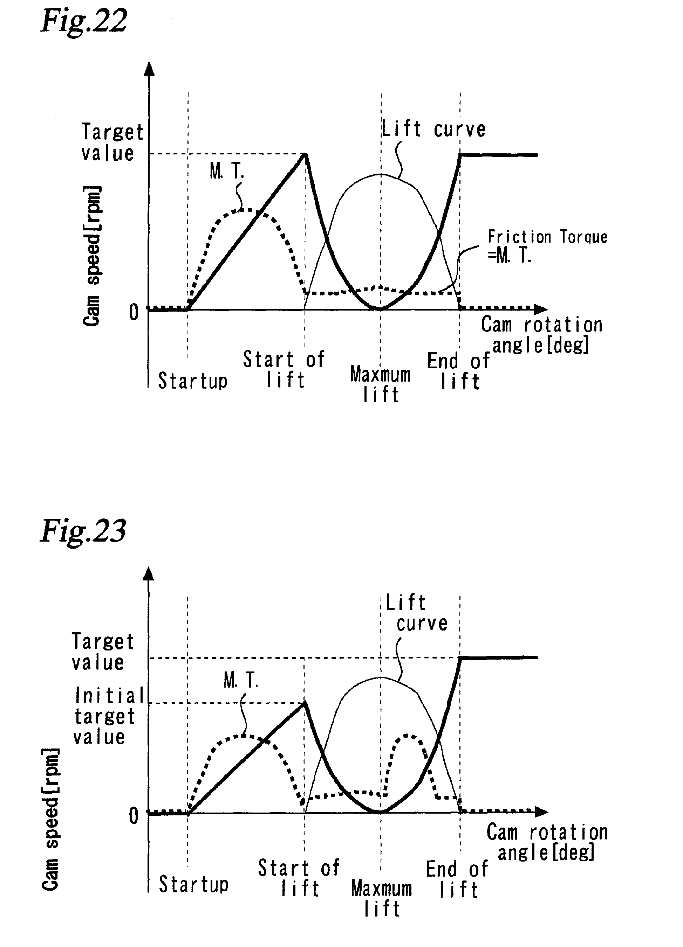

A sixth embodiment of the present invention will now be described with reference to Fig. 22.
The hardware shown in Figs. 1 to 5 can be used as a system according to the sixth embodiment.

### [Features of Sixth Embodiment]

The first and second embodiments have been described in conjunction with motor drive control that is initiated when the cam and camshaft are rotating.

The sixth embodiment will be described in conjunction with motor drive control that is initiated when the cam and camshaft are stopped. Fig. 22 shows cam rotation speed changes and motor torque in the sixth embodiment.

As shown in Fig. 22, the cam is stopped at a base circle before the beginning of startup. Therefore, the cam rotation speed and camshaft rotation speed are zero. Further, the camshaft rotary inertia force is also zero.

During a subsequent cam base circle slide, that is, during the time interval between the instant at which startup begins and the instant at which a lift is about to begin, the cam rotation speed is raised to a target value. As a result, the camshaft rotary inertia force reaches a predetermined value. In this instance, no spring reaction force acts on the camshaft. Therefore, acceleration can be achieved by a smaller motor torque than when acceleration is achieved during a valve lift. When an extra motor torque is available, the acceleration is executed slowly so that the cam rotation speed reaches the target value at the beginning of a lift. The reason is that slow acceleration requires less motor power consumption than sudden acceleration.

During the subsequent time interval between the instant at which a lift starts and the instant at which the maximum lift is provided, only the counter-friction torque is required to the motor to generate without requiring the motor to generate the counter-spring-reaction-force torque. Therefore, the spring reaction force decreases the cam rotation speed, thereby gradually decreasing the camshaft rotary inertia force.

During the time interval between the instant at which the maximum lift is provided and the instant at which a valve lift terminates, only the counter-friction torque is required to the motor to generate also without requiring the motor to generate the counter-spring-reaction-force torque. Therefore, the spring reaction force increases the cam rotation speed, thereby gradually increasing the camshaft rotary inertia force. Since the cam rotation speed reaches the aforementioned target value again at the end of a valve lift, the camshaft rotary inertia force reaches the predetermined value again.

As described above, the sixth embodiment increases the cam rotation speed before the start of a lift to increase the camshaft rotary inertia force to a value equal to or more than the predetermined value, thereby allowing the camshaft rotary inertia force to cancel the spring reaction force. Therefore, it is necessary that only the counter-friction torque be generated by the motor during a valve lift as shown in Fig. 22. Further, during a cam base circle slide before the start of a lift, the cam rotation speed can be increased by a relatively small motor torque. In other words, the motor torque for increasing the cam rotation speed is smaller than the counter-spring-reaction-force torque. Therefore, it is possible to reduce the power consumption and rating of the motor.

In the sixth embodiment, the ECU 30 corresponds to the "control means" according to the ninth aspect of the present invention.

### Seventh Embodiment

A seventh embodiment of the present invention will now be described with reference to Fig. 23.
The hardware shown in Figs. 1 to 5 can be used as a system according to the seventh embodiment.

### [Features of Seventh Embodiment]

In the sixth embodiment described earlier, the motor torque for increasing the cam rotation speed before the start of a lift is greater than the motor torque used during a valve lift. In such an instance, the power consumption and rating of the motor are determined by the motor torque used at the beginning of cam drive.

As such being the case, the seventh embodiment will be described in conjunction with a method of reducing the motor torque during the time for cam drive start (that is, during the time for cam rotation speed acceleration before the start of a lift). Fig. 23 shows cam rotation speed changes and motor torque in the seventh embodiment.

As shown in Fig. 23, the cam rotation speed is raised to an initial target value during a cam base circle slide ,that is, during the time interval between the instant at which startup begins and the instant at which a lift is about to begin. The initial target value is smaller than the target value used in the sixth embodiment. Therefore, the motor torque required for raising the cam rotation speed to the second target value is smaller than the motor torque required for raising the cam rotation speed to the above-mentioned target value.

During the subsequent time interval between the instant at which a lift starts and the instant at which the maximum lift is provided, only the counter-friction torque is required to the motor to generate without requiring the motor to generate the counter-spring-reaction-force torque. Therefore, the spring reaction force decreases the cam rotation speed, thereby gradually decreasing the camshaft rotary inertia force.

Before the start of a lift, the cam rotation speed is merely raised to the initial target value. If this condition is allowed to continue, the cam rotation speed does not reach the target value at the end of a lift. Therefore, the torque for raising the cam rotation speed is required to the motor to generate during the time interval between the instant at which the maximum lift is provided and the instant at which a valve lift terminates. The motor torque required in this stage is equal to or smaller than the motor torque required before the start of a lift. Generating such motor torque ensures that the cam rotation speed reaches the target value at the end of a lift.

As described above, the seventh embodiment increases the cam rotation speed to the initial target value, which represents a lower cam rotation speed than the target value, before the start of a lift, and generates motor torque during a cam lift so that the cam rotation speed reaches the target value at the end of a lift. Therefore, the motor torque required for the start of cam drive is smaller in the seventh embodiment than in the sixth embodiment. Consequently, the power consumption and rating of the motor can be reduced.

In the seventh embodiment, the ECU 30 corresponds to the "control means" according to the tenth aspect of the present invention.

### Eighth Embodiment

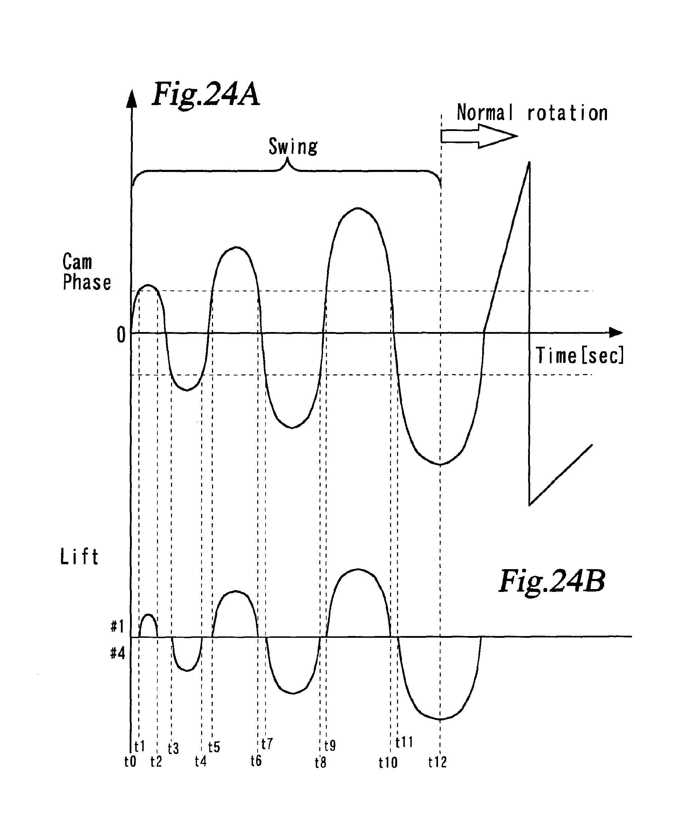

An eighth embodiment of the present invention will now be described with reference to Figs. 24A and 24B.
The hardware shown in Figs. 1 to 5 can be used as a system according to the eighth embodiment.

### [Features of Eighth Embodiment]

At the time of engine startup, no camshaft rotary inertia force exists. If the camshaft rotary inertia force is smaller than a peak torque Tp shown in Fig. 7, a cam lobe cannot be overridden. It means that the cam cannot be driven in a normal rotation direction.
In the seventh embodiment, which has been described earlier, the cam rotation speed is raised to the initial target value by imparting motor torque to the camshaft during a cam base circle slide, that is, during the time interval between the instant at which engine startup begins and the instant at which a valve lift is about to begin. Subsequently, the cam rotation speed is raised to the final target value by imparting motor torque during the time interval between the instant at which the maximum lift is provided and the instant at which the valve lift terminates. As described above, the motor torque is imparted in two steps to reduce the motor rating and increase the camshaft rotary inertia force to a value not smaller than the peak torque Tp.

The eighth embodiment will be described in conjunction with a method for further reducing the motor rating than that in the seventh embodiment, which has been described earlier. Figs. 24A and 24B show cam phase changes and valve lifts in the eighth embodiment. More specifically, Fig. 24A shows cam phase changes, whereas Fig. 24B shows the valve lifts of the first cylinder #1 and fourth cylinder #4.

At time t0, which is indicated in Figs. 24A and 24B, an engine startup sequence begins. This engine startup sequence is also employed as an engine restart sequence. Motor torque is imparted to the camshaft during the interval between time t0 and time t1, which is the time for starting a valve lift for the first cylinder #1, that is, during a cam base circle slide between the beginning of engine startup and the start of a valve lift. The cam rotation speed then increases to increase the camshaft rotary inertia force. The motor torque imparted between time t0 and time t1 can be smaller than the motor torque imparted before the start of a lift in the seventh embodiment. Therefore, the motor rating can be reduced.

During a subsequent valve lift between time t1 and time t2, no motor torque is imparted to the camshaft. Then, during the interval between time t2 at which the valve lift for the first cylinder #1 terminates and time t3 at which a valve lift for the fourth cylinder #4 starts, motor torque oriented in a direction opposite the torquing direction employed between time t0 and time t1 is imparted to the camshaft. This ensures that the cam rotation speed at time t3 is higher than the cam rotation speed at time t1. As a result, the camshaft rotary inertia force at time t3 is greater than the camshaft rotary inertia force at time t1. The cam phase then increases to increase the cam swing range.

During the subsequent interval between time t4 at which the valve lift for the fourth cylinder #4 terminates and time t5 at which a valve lift for the first cylinder #1 starts, motor torque oriented in a direction opposite the torquing direction used between time t2 and time t3 is imparted to the camshaft. This ensures that the cam rotation speed at time t5 is higher than the cam rotation speed at time t3. As a result, the camshaft rotary inertia force at time t5 is greater than the camshaft rotary inertia force at time t3. As a result, the cam phase further increases so as to further increase the cam swing range.

During a subsequent cam base circle slide between time t6 and time t7, between time t8 and time t9, and between time t10 and time t11, motor torque is imparted to the camshaft in the same manner as described above. Then, the cam rotation speed increases as the time elapses from t7 through t9 to t11, thereby gradually increasing the camshaft rotary inertia force. As a result, the cam phase gradually increases so as to gradually increase the cam swing range. This causes the valve lift amount to gradually increase.
When the camshaft rotary inertia force necessary for driving the cam in a normal rotation direction is obtained at time t11, switching is made at time t12 to drive the cam in a normal rotation direction. In other words, normal rotation drive of the cam synchronizing with crankshaft rotation arises after time t12.

As described above, the eighth embodiment gradually increases the cam rotation speed by imparting motor torque to the camshaft so as to drive the cam to swing during a cam base circle slide after the beginning of engine startup. As a result, the cam phase gradually increases to gradually increase the camshaft rotary inertia force. When the camshaft rotary inertia force later reaches a predetermined value necessary for normal rotation drive, normal rotation drive of the cam synchronizing with crankshaft rotation arises. When the camshaft rotary inertia force is gradually accumulated while the cam is driven to swing as described above, a predetermined value (peak torque) necessary for normal rotation drive can be attained even using a motor with a low rating. Therefore, the eighth embodiment can provide lower motor resistance than the seventh embodiment, which has been described earlier.

### Ninth Embodiment

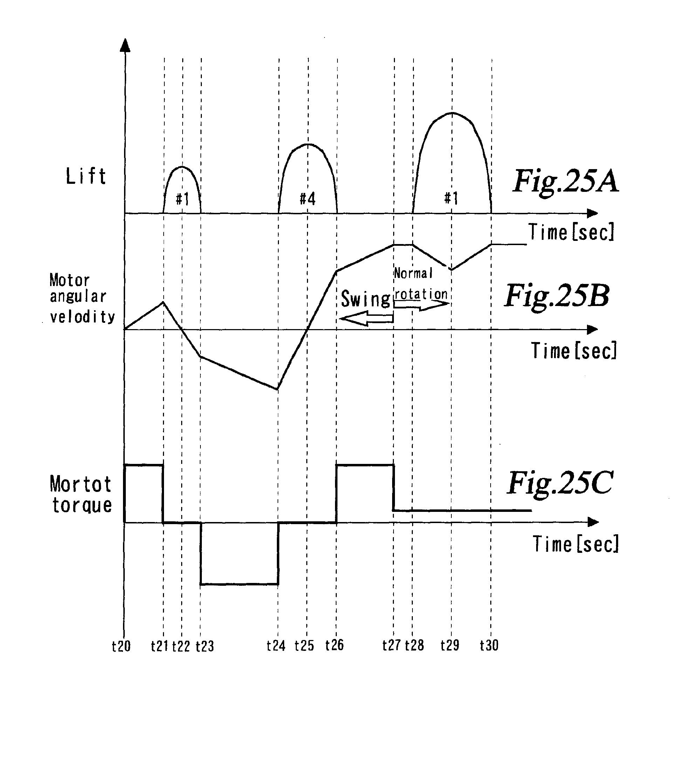

A ninth embodiment of the present invention will now be described with reference to Figs. 25 to 27.
The hardware shown in Figs. 1 to 5 can be used as a system according to the ninth embodiment.

### [Features of Ninth Embodiment]

The eighth embodiment, which has been described earlier, gradually increases the cam swing range (phase) at engine startup to increase the cam rotation speed and camshaft rotary inertia force, and then switches the cam from the swing drive mode to the normal rotation drive mode. In the eighth embodiment, however, no motor torque is imparted to the camshaft during a valve lift. This scheme is employed to reduce the power consumption of the motor during a valve lift.

An engine startup request is not only generated in compliance with an acceleration request, which is based on a vehicle driver's accelerator operation, but also generated in compliance with a catalyst warm-up request, which is issued when the catalyst bed temperature is low. If the catalyst bed temperature is not higher than a predetermined value while the engine is stopped, the ECU 30 judges that an engine startup request is generated in accordance with a catalyst warm-up request. The catalyst bed temperature can be detected by the catalyst bed temperature sensor 45 shown in Fig. 3. Further, if an accelerator pedal is depressed while the engine is stopped, the ECU 30 judges that an engine startup request is generated in accordance with an acceleration request. A depressed accelerator pedal can be detected by the accelerator angle sensor 36 shown in Fig. 3.

When an engine startup request is generated in accordance with an acceleration request, it is necessary to start the engine in a short period of time. To achieve engine startup in a short period of time, it is preferred that the cam is switched from the swing drive mode to the normal rotation drive mode in a short period of time. The reason is that the normal rotation drive mode for the cam provides a larger time area and higher intake performance than the swing drive mode.
When, on the other hand, an engine startup request is generated in accordance with a catalyst warm-up request, there is no need to start the engine in a short period of time unlike in the case of the aforementioned engine startup request based on an acceleration request.
However, if the accelerator angle is significantly small, it is not always necessary to start the engine in a short period of time no matter when an engine startup request is generated in accordance with an acceleration request.

Under the above circumstances, the ninth embodiment determines whether or not to impart motor torque to the camshaft during a valve lift in accordance with the degree of requested acceleration indicated by the engine startup request. In other words, the ninth embodiment changes a motor assist pattern in accordance with the engine startup request.

More specifically, the degree of requested acceleration is small when an engine startup request is generated in accordance with a catalyst warm-up request. In this instance, therefore, no motor torque is imparted to the camshaft during a valve lift as indicated in Figs. 25A to 25C. Figs. 25A to 25C show an example of motor torque that is imparted in the ninth embodiment when an engine startup request is generated in accordance with a catalyst warm-up request. More specifically, Fig. 25A shows a valve lift; Fig. 25B shows a motor angular velocity; and Fig. 25C shows a motor torque (control instruction value). The motor angular velocity correlates with (is proportional to) the camshaft rotation speed.

When an engine startup request based on a catalyst warm-up request is acquired, an engine startup sequence begins at time t20, which is shown in Figs. 25A to 25C. As indicated in Fig. 25B, the motor angular velocity is zero at time t20. During a cam base circle slide between time t20 and time t21 at which a valve lift for the first cylinder #1 starts, motor torque is imparted to the camshaft. The motor angular velocity and camshaft rotation speed then increase. During a subsequent valve lift between time t21 and time t23, no motor torque is imparted to the camshaft. Therefore, the spring reaction force oriented in a direction opposite the camshaft rotation direction reduces the motor angular velocity and camshaft rotation speed before the maximum lift is provided at time t22. After time t22, the camshaft rotation direction reverses so that the spring reaction force oriented in the same direction as the reversed camshaft rotation direction increases the motor angular velocity and camshaft rotation speed.

During a subsequent cam base circle slide between time t23 at which the valve lift terminates and time t24 at which a valve lift for the fourth cylinder #4 starts, motor torque oriented in the same direction as the camshaft rotation direction is imparted. As a result, the motor angular velocity (absolute value) at time t24 is higher than the motor angular velocity (absolute value) at time t21.

During a subsequent valve lift between time t24 and time t26, no motor torque is imparted to the camshaft as is the case with the interval between time t21 and time t23. Therefore, the spring reaction force oriented in a direction opposite the camshaft rotation direction reduces the motor angular velocity and camshaft rotation speed before the maximum lift is provided at time t25. After time 25, the camshaft rotation direction reverses so that the spring reaction force oriented in the same direction as the camshaft rotation direction increases the motor angular velocity and camshaft rotation speed.

During a subsequent cam base circle slide after time t26 at which the valve lift terminates, motor torque oriented in the same direction as the camshaft rotation direction is imparted. As a result, the motor angular velocity and camshaft rotation speed for normal rotation drive are reached at time t27. Therefore, the motor torque is changed to a torque composed of friction torque only. After time t27, the cam is switched to the normal rotation drive mode, and control is exercised to synchronize the cam with the crankshaft. Consequently, the cam is driven in a normal rotation direction to perform a valve lift for the first cylinder #1 during the interval between time t28 and time t30. This makes it possible to perform ignition for the first cylinder #1.

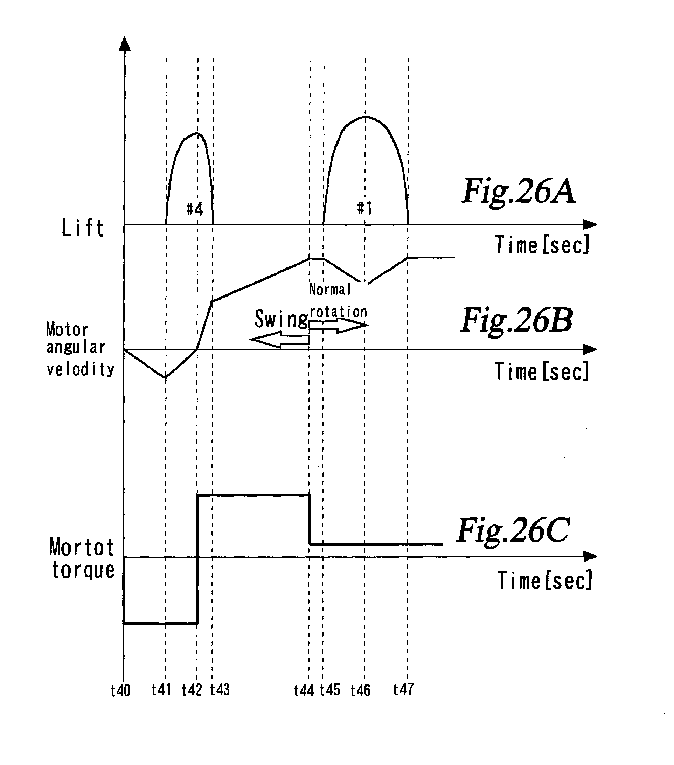

On the other hand, when an engine startup request based on an acceleration request is acquired, motor torque is imparted to the camshaft during a valve lift as shown in Figs. 26A to 26C. Figs. 26A to 26C show an example of motor torque that is imparted in the ninth embodiment when an engine startup request is generated in accordance with an acceleration request. More specifically, Fig. 26A shows a valve lift; Fig. 26B shows a motor angular velocity; and Fig. 26C shows a motor torque (control instruction value).

When an engine startup request based on an acceleration request is acquired, an engine startup sequence begins at time t40, which is shown in Figs. 26A to 26C. As indicated in Fig. 26B, the motor angular velocity is zero at time t40. During a cam base circle slide between time t40 and time t41 at which a valve lift for the fourth cylinder #4 starts, motor torque is imparted to the camshaft. The motor angular velocity and camshaft rotation speed then increase.

During a subsequent valve lift between time t41 and time t43, motor torque is also imparted to the camshaft unlike in the case shown in Figs. 25A to 25C. More specifically, the same motor torque as for a period preceding time t41 is imparted during the interval between time t41 at which a valve lift starts and time t42 at which the maximum lift is provided, and motor torque oriented in an opposite direction is imparted during the interval between time t42 and time t43 at which the valve lift terminates. As a result, the motor angular velocity (absolute value) at time t43 at which the valve lift terminates is higher than the motor angular velocity (absolute value) at time t41 at which the valve lift starts.

During a subsequent cam base circle slide after time t43 at which the valve lift terminates, the same motor torque as for the interval between time t42 and time t43 is imparted. As a result, the motor angular velocity and camshaft rotation speed for normal rotation drive are reached at time t44. Therefore, the motor torque is changed to a torque composed of friction torque only. The interval between time t40 and time t44 is shorter than the interval between time t20 and time t27, which are shown in Figs. 25A to 25C. In other words, the example shown in Figs. 26A to 26C makes it possible to switch to the normal rotation drive mode in a shorter period of time than the example shown in Figs. 25A to 25C.

After time t44, the cam is switched to the normal rotation drive mode, and control is exercised to synchronize the cam with the crankshaft. Consequently, a valve lift is performed for the first cylinder #1 during the interval between time t45 and time t47. This makes it possible to perform ignition for the first cylinder #1.

### [Details of Process Performed by Ninth Embodiment]

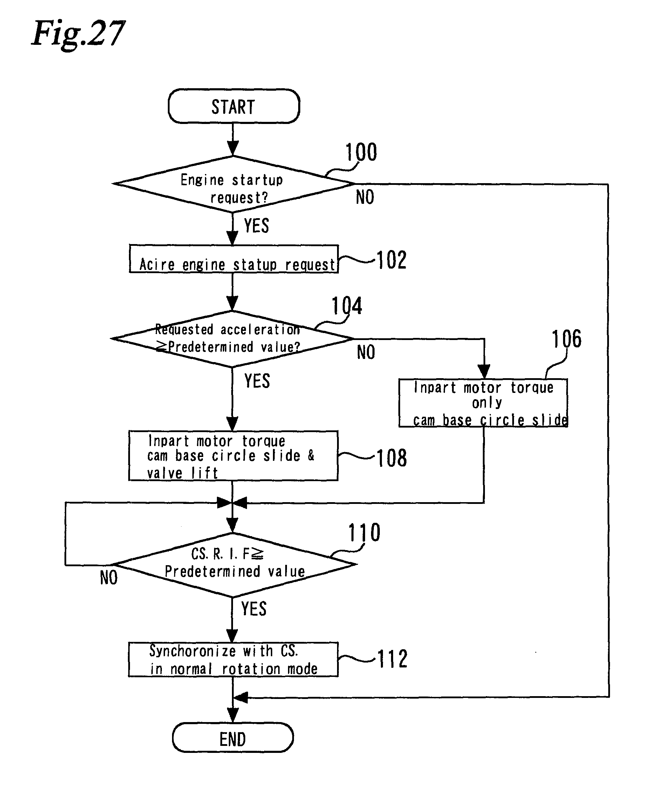

Fig. 27 is a flowchart illustrating a routine that the ECU 30 executes in the ninth embodiment. The routine is started at predetermined time intervals while the engine is stopped due, for instance, to the use of an EV mode.
First of all, the routine shown in Fig. 27 judge whether an engine startup request is generated performs (step 100). In step 100, if the catalyst bed temperature is equal to or lower than the predetermined value, it is judged that an engine startup request is generated in accordance with a catalyst warm-up request. If, on the other hand, a vehicle driver has operated an accelerator (stepped on the accelerator pedal), it is judged that an engine startup request is generated in accordance with an acceleration request. If it is judged in step 100 that no engine startup request is generated, the routine terminates.

If it is judged in step 100 that an engine startup request is generated, the engine startup request is acquired (step 102). Next, it is judge whether the degree of requested acceleration indicated by the engine startup request acquired in step 102 is equal to or larger than a predetermined value (step 104). Step 104 is performed to judge whether engine startup in a short period of time is requested. More specifically, this step is performed to judge whether the accelerator angle is equal to or larger than a predetermined value.

If it is judged in step 104 that the degree of requested acceleration is smaller than the predetermined value in a situation, for instance, where the accelerator pedal is slightly stepped on or where catalyst warm-up is requested with the accelerator pedal insignificantly stepped on, it is concluded that engine startup in a short period of time is not requested. In this instance, motor torque is imparted to the camshaft only during a cam base circle slide (step 106). In step 106, motor torque control shown, for instance, in Figs. 25A to 25C is exercised.

If, on the other hand, it is judged in step 104 that the degree of requested acceleration is equal to or more than the predetermined value in a situation, for instance, where the accelerator pedal is considerably stepped on, it is concluded that engine startup in a short period of time is requested. In other words, it is concluded that the cam needs to be driven in a normal rotation direction in a short period of time. In this instance, motor torque is imparted to the camshaft not only during a cam base circle slide but also during a valve lift (step 108). In step 108, motor torque control shown, for instance, in Figs. 26A to 26C is exercised.

After completion of step 106 or 108, it is judge whether the camshaft rotary inertia force is equal to or more than a predetermined value (step 110). The predetermined value (that is, the peak torque) represents the camshaft rotary inertia force required for driving the cam in a normal rotation direction and is used as a reference value for judging whether it is possible to switch the cam from the swing drive mode to the normal rotation drive mode. If it is judged in step 110 that the camshaft rotary inertia force is smaller than the predetermined value, flow returns to step 110. If, on the other hand, it is judged in step 110 that the camshaft rotary inertia force is equal to or more than the predetermined value, the camshaft is placed in the normal rotation drive mode and control for synchronizing the camshaft with the rotation of the crankshaft is exercised (step 112). Upon completion of step 112, the routine terminates.

As described above, when the degree of requested acceleration indicated by the engine startup request is high, the ninth embodiment imparts motor torque not only during a cam base circle slide but also during a valve lift. Since this allows the camshaft rotary inertia force to increase in a short period of time, it is possible to switch from the swing drive mode to the normal rotation drive mode in a short period of time. As a result, a high degree of requested acceleration can be achieved in compliance with a request. When, on the other hand, the degree of requested acceleration indicated by the engine startup request is low, the ninth embodiment imparts motor torque only during a cam base circle slide. Since this causes the cam to be switched from the swing drive mode to the normal rotation drive mode in a relatively long period of time, the power consumption of the motor can be reduced. Consequently, the ninth embodiment can not only reduce the motor rating but also switch from the swing drive mode to the normal rotation drive mode with optimum timing according to the degree of requested acceleration.

In the ninth embodiment, the "control means" according to the thirteenth aspect of the present invention is implemented when the ECU 30 performs steps 108, 110, and 112; the "startup request acquisition means" according to the fourteenth aspect of the present invention is implemented when the ECU 30 performs step 102; the "control means" according to the fourteenth aspect of the present invention is implemented when the ECU 30 performs steps 104, 106, and 108; the "judgment means" according to the fifteenth aspect of the present invention is implemented when the ECU 30 performs step 104; and the "control means" according to the fifteenth aspect of the present invention is implemented when the ECU 30 performs steps 106 and 108.

## Claims

1. A variable valve mechanism control device for an internal combustion engine, comprising:
a camshaft on which a cam is mounted to drive a valve that is biased by a valve spring;
an electric motor which rotationally drives the camshaft; and
control means for exercising drive control over the electric motor;
wherein the control means controls the rotary inertia force of the camshaft so as to be equal to or more than a predetermined value at the beginning of a valve lift so that the rotary inertia force cancels the spring reaction force of the valve spring.

2. The variable valve mechanism control device according to claim 1, wherein the control means controls the rotational position of the electric motor so that the rotation speed of the camshaft is decreased by the spring reaction force exerted during the time interval between the instant at which a valve lift starts and the instant at which the maximum lift position is reached, and that the rotation speed of the camshaft is increased by the spring reaction force exerted during the time interval between the instant at which the maximum lift position is reached and the instant at which the valve lift terminates.

3. The variable valve mechanism control device according to claim 1, wherein the control means employs the spring reaction force exerted during the time interval between the instant at which the valve lift starts and the instant at which the maximum lift position is reached as deceleration torque for the rotary inertia force, while employing the spring reaction force exerted during the time interval between the instant at which the maximum lift position is reached and the instant at which the valve lift terminates as acceleration torque for the rotary inertia force.

4. The variable valve mechanism control device according to claim 1, wherein, when the rotary inertia force exerted at the end of the valve lift is smaller than the predetermined value, the control means requires during a cam base circle slide to the electric motor to generate such torque that causes said rotary inertia force to be equal to or more than the predetermined value.

5. The variable valve mechanism control device according to claim 1, wherein the control means inhibits the electric motor to generate torque opposing the spring reaction force and requires the electric motor to generate only torque opposing the friction of the cam and valve during a valve lift.

6. The variable valve mechanism control device according to any one of claims 1 to 5, further comprising:
engine speed change means which raises an engine speed to a value equal to or more than a predetermined value when a requested engine output value is equal to or more than a predetermined value and the engine speed is in a low rotation speed region where the engine speed is equal to or lower than the predetermined value.

7. The variable valve mechanism control device according to any one of claims 1 to 5, further comprising:
an inertia force increase member which is installed in a cam drive system having the camshaft and the electric motor to increase the camshaft rotary inertia force;
wherein the inertia force increase member adjusts the enlargement range for an actual operating angle in a low rotation speed region where an engine speed is equal to or lower than a predetermined value.

8. The variable valve mechanism control device according to any one of claims 1 to 5, further comprising:
an inertia force change mechanism which can change the camshaft rotary inertia force when the operating angle of the valve is to be changed within a low rotation speed region where an engine speed is equal to or lower than a predetermined value.

9. The variable valve mechanism control device according to claim 1, wherein, when the cam is to be driven from a stopped state, the control means requires the electric motor to generate such torque that causes the rotary inertia force to be equal to or more than a predetermined value during a cam base circle slide before the start of a valve lift.

10. The variable valve mechanism control device according to claim 1, wherein, when the cam is to be driven from a stopped state, the control means requires the electric motor to generate such torque that causes the rotary inertia force to reach a predetermined initial value during a cam base circle slide before the start of a valve lift, and then requires the electric motor to generate such torque that causes the rotary inertia force at the end of the valve lift to reach a predetermined value greater than the predetermined initial value.

11. The variable valve mechanism control device according to claim 1, wherein, when the cam is to be driven in a normal rotation direction, the control means changes the rotation speed of the camshaft during a cam base circle slide in accordance with an engine speed so that the rotation of the camshaft synchronizes with the rotation of a crankshaft.

12. A variable valve mechanism control device for an internal combustion engine, comprising:
a camshaft on which a cam is mounted to drive a valve that is biased by a valve spring;
an electric motor which rotationally drives the camshaft; and
control means for exercising drive control over the electric motor;
wherein the control means controls the rotational position of the electric motor so that the cam rotation speed during a valve lift is equal to or lower than the cam rotation speed during a cam base circle slide.

13. The variable valve mechanism control device according to claim 1, wherein the control means increase the rotary inertia force to a value equal to or more than a predetermined value by imparting torque of the electric motor during a cam base circle slide so as to swingingly drive the cam, and then synchronizes the rotation of the camshaft with the rotation of a crankshaft.

14. The variable valve mechanism control device according to claim 13, further comprising:
startup request acquisition means for acquiring a startup request for the internal combustion engine;
wherein the control means changes the period for swingingly driving the cam to increase the rotary inertia force in compliance with the startup request acquired by the startup request acquisition means.

15. The variable valve mechanism control device according to claim 14, wherein the control means includes judgment means for determining the degree of requested acceleration indicated by the startup request, applies the torque of the electric motor only during a cam base circle slide if the degree of requested acceleration is smaller than a predetermined value, and applies the torque of the electric motor not only during a cam base circle slide but also during a valve lift if the degree of requested acceleration is equal to or more than the predetermined value.
